# EUROPÄISCHE PATENTANMELDUNG

(11) **EP 4 223 652 A1**
(43) Veröffentlichungstag der Anmeldung: **09.08.2023**
(21) Anmeldenummer: 23154383.6
(22) Anmeldetag: 01.02.2023
(51) Int. Cl.: B65B 5/06, B65B 25/06, B65B 35/16, B65B 61/20, B65B 43/28, B65B 49/02

(54) **HANDHABUNG VON LEBENSMITTELPRODUKTEN**

(30) Priorität: 04.02.2022 DE 102022102713; 14.04.2022 DE 102022109288
(71) Anmelder: Weber Maschinenbau GmbH Breidenbach, 35236 Breidenbach (DE)
(72) Erfinder: KUHMICHEL, Christoph, Bad Laasphe (DE); NICHAU, Marco, Bad Laasphe (DE); RUPP, Franziska, Breidenbach (DE); RUNKEL, Andreas, Biedenkopf (DE); RINK, Matthias, Bad Endbach (DE); KNAUF, Michael, Amöneburg-Mardorf (DE)
(74) Vertreter: Manitz Finsterwald Patent- und Rechtsanwaltspartnerschaft mbB

(57) **Zusammenfassung**

Die Erfindung betrifft ein Verfahren zur Handhabung von Lebensmittelprodukten, bei dem zumindest ein jeweiliges Produkt auf einen Träger gelegt wird, der eine Basis und eine relativ zur Basis um eine Knicklinie verschwenkbare Lasche aufweist, der Träger samt aufliegendem Produkt einem Aufnahmebereich zugeführt wird, der in einem Arbeitsbereich einer Übergabeeinrichtung gelegen ist, und der Träger samt aufliegendem Produkt von der Übergabeeinrichtung aufgenommen, dann mittels der Übergabeeinrichtung einem Einlegebereich einer Verpackungsmaschine zugeführt und dort mit einer Abwärtsbewegung der Übergabeeinrichtung in einen Packungsbestandteil eingelegt wird, wobei der Träger während der Abwärtsbewegung an einer im Einlegebereich angeordneten Faltkontur vorbeibewegt und dabei einerseits die Lasche durch Zusammenwirken mit der Faltkontur relativ zur Basis verschwenkt und andererseits der Träger von einer an oder im Bereich der Knicklinie wirksamen Halteeinrichtung der Übergabeeinrichtung gegen Abheben gesichert wird.

## Beschreibung

Die Erfindung betrifft ein Verfahren zur Handhabung von Lebensmittelprodukten, bei dem zumindest ein jeweiliges Produkt auf einen Träger gelegt wird, der eine Basis und eine relativ zur Basis um eine Knicklinie verschwenkbare Lasche aufweist, der Träger samt aufliegendem Produkt einem Aufnahmebereich zugeführt wird, der in einem Arbeitsbereich einer Übergabeeinrichtung gelegen ist, und der Träger samt aufliegendem Produkt von der Übergabeeinrichtung aufgenommen, dann mittels der Übergabeeinrichtung einem ebenfalls im Arbeitsbereich der Übergabeeinrichtung gelegenen Einlegebereich einer Verpackungsmaschine zugeführt und dort mit einer Abwärtsbewegung der Übergabeeinrichtung in einen Packungsbestandteil eingelegt wird.

Die Erfindung betrifft außerdem eine Übergabeeinrichtung sowie eine Verpackungsmaschine.

Derartige Verfahren und Vorrichtungen sind grundsätzlich bekannt. Bei den zu handhabenden Lebensmittelprodukten handelt es sich beispielsweise um Portionen, die eine oder mehrere von einem Lebensmittel, z.B. Schinken, Wurst oder Käse, abgetrennte und gestapelte oder geschindelte Scheiben umfassen. Das Abtrennen der Scheiben von dem Lebensmittel erfolgt insbesondere mit einer automatischen Aufschneidemaschine, insbesondere mit einem so genannten Hochleistungsslicer. Derartige Maschinen sind in der Lage, von einem oder gleichzeitig von mehreren nebeneinander angeordneten, riegel- oder laibförmigen Lebensmittelprodukten Scheiben mit hoher Geschwindigkeit abzutrennen, und zwar mit einer Schneidgeschwindigkeit von einigen hundert bis mehreren tausend Scheiben pro Minute.

Bei den Trägern handelt es sich insbesondere um flache, vorzugsweise zumindest näherungsweise rechteckige, plattenartige Gebilde, die beispielsweise aus Karton, Papier oder Kunststoff bestehen. Die Basis eines solchen Produktträgers besitzt typischerweise eine deutlich größere Fläche als die Lasche. Derartige Träger werden im Hinblick auf ihre Querschnittsform bei verschwenkter Lasche auch als L-Boards bezeichnet. Durch die um die Knicklinie verschwenkte Lasche wird das auf der Basis liegende Produkt zumindest teilweise verdeckt.

In der Praxis werden in einer Gesamtproduktionslinie die insbesondere mit einem Hochleistungsslicer erzeugten Portionen in einer dem Slicer nachgeordneten Einrichtung auf die Träger gelegt und dann einer ebenfalls zur Produktionslinie gehörenden Verpackungsmaschine zugeführt, in der jeweils die Anordnung aus Träger und Produkt verpackt wird.

Verpackungsmaschinen für derartige Produktträger sind grundsätzlich bekannt, so dass hierauf nicht im Einzelnen eingegangen zu werden braucht. Mittels der Verpackungsmaschine können z.B. einzelne oder noch zusammenhängende, später zu trennende Schalen, beispielsweise sogenannte Trays, oder zuvor in einer Materialbahn, beispielsweise einer Kunststofffolie, durch Tiefziehen ausgebildete Vertiefungen dem jeweiligen Einlegebereich zugeführt werden. Dort kann eine vorzugsweise als Roboter ausgebildete Handhabungseinrichtung mit einer insbesondere von einem Robotergreifer gebildeten Übergabeeinrichtung die jeweils zuvor am Aufnahmebereich samt aufliegendem Produkt aufgenommenen Träger in einen jeweiligen Packungsbestandteil, also z.B. in einen Tray oder eine Vertiefung, einlegen.

Der Aufnahmebereich, dem die Träger samt aufliegenden Produkten zugeführt werden, wird beispielsweise von einem sich parallel zur Transportrichtung der Verpackungsmaschine erstreckenden Förderband gebildet, das an der Verpackungsmaschine abgestützt werden und somit einen Bestandteil der Verpackungsmaschine bilden kann. Grundsätzlich ist es aber auch möglich, dass ein Aufnahmebereich von einer separaten Zuführeinrichtung gebildet wird. Das Zuführen der Träger jeweils samt aufliegendem Produkt erfolgt derart, dass sich der Aufnahmebereich und der Einlegebereich der Verpackungsmaschine im Arbeitsbereich der Übergabeeinrichtung befinden.

Die Übergabeeinrichtung kann von einem auch als "Picker" bezeichneten Pick-And-Place-Roboter gebildet werden, dessen Manipulator beispielsweise eine oder mehrere relativ zueinander bewegliche Schaufeln umfasst, die unter einen jeweiligen Träger greifen und diesen so samt aufliegendem Produkt aufnehmen und über einem Packungsbestandteil der Verpackungsmaschine wieder ablegen können, um den Träger samt aufliegendem Produkt in den Packungsbestandteil einzulegen. Mehrere derartige Übergabeeinrichtungen können in Transportrichtung der Verpackungsmaschine hintereinander angeordnet sein.

Vor diesem Hintergrund versteht sich, dass es bei Verwendung der hier in Rede stehenden Produktträger erforderlich ist, diese Träger jeweils vor dem Einlegen in den Packungsbestandteil zu falten, d.h. die Lasche relativ zur Basis zu verschwenken, und zwar bei auf der Basis aufliegendem Produkt.

Unterschiedliche Methoden zum Falten von z.B. als L-Boards ausgebildeten Produktträgern sind bereits vorgeschlagen worden. Zum diesbezüglichen Stand der Technik wird beispielsweise auf DE 10 2016 108 212 A1 sowie DE 10 2016 108 213 A1 verwiesen.

Aufgabe der Erfindung ist es, vor dem vorstehend geschilderten Hintergrund eine Möglichkeit zur Handhabung von Lebensmittelprodukten zu schaffen, bei der jeweils die Lasche des Trägers auf einfache und zuverlässige Weise relativ zur Basis des Trägers verschwenkt werden kann.

Die Lösung dieser Aufgabe erfolgt jeweils durch die Merkmale der unabhängigen Ansprüche.

Bei dem einen erfindungsgemäßen Verfahren (Anspruch 1) ist vorgesehen, dass der Träger während der Abwärtsbewegung an einer im Einlegebereich angeordneten Faltkontur vorbeibewegt und dabei einerseits die Lasche durch Zusammenwirken mit der Faltkontur relativ zur Basis verschwenkt und andererseits der Träger von einer an oder im Bereich der Knicklinie wirksamen Halteeinrichtung der Übergabeeinrichtung gegen Abheben gesichert wird.

Bei dem anderen erfindungsgemäßen Verfahren ist vorgesehen, dass der Träger vor dem Einlegen in den Packungsbestand gefaltet oder vorgefaltet wird, indem die Lasche mittels einer in die Übergabeeinrichtung integrierten Schwenkeinrichtung relativ zur Basis verschwenkt wird, und wobei während des Verschwenkens der Lasche der Träger von einer an oder im Bereich der Knicklinie wirksamen Halteeinrichtung der Übergabeeinrichtung gegen Abheben gesichert wird.

Bei dem erstgenannten Verfahren (Anspruch 1) erfolgt das Verschwenken der Lasche durch ein Zusammenspiel von Übergabeeinrichtung und Verpackungsmaschine, wobei die ohnehin erfolgende Relativbewegung während der Abwärtsbewegung der Übergabeeinrichtung ausgenutzt wird, um die Lasche des jeweiligen Trägers dadurch zu verschwenken, dass der Träger an einer im Einlegebereich der Verpackungsmaschine angeordneten Faltkontur so vorbeibewegt wird, dass die Lasche des Trägers an der Faltkontur anschlägt und somit durch diese verschwenkt wird. Die Anordnung der Faltkontur relativ zu den Packungsbestandteilen und die Programmierung der Bewegung der Übergabeeinrichtung können derart erfolgen, dass die Abwärtsbewegung der Übergabeeinrichtung genau im richtigen Abstand von der Faltkontur erfolgt.

Dieses Konzept zum Falten von Produktträgern zeichnet sich also zum einen durch das Zusammenwirken von Übergabeeinrichtung und Verpackungsmaschine aus, wobei die Verpackungsmaschine hierzu mit der erwähnten Faltkontur versehen ist. Zum anderen zeichnet sich dieses Konzept dadurch aus, dass die Übergabeeinrichtung außerdem mit einer Halteeinrichtung versehen ist, die an oder im Bereich der Knicklinie eines jeweiligen aufliegenden Trägers wirksam ist. Damit ist die Halteeinrichtung genau an der erforderlichen Stelle wirksam, nämlich an oder im Bereich der Knicklinie, und zwar derart, dass der Träger nicht abheben kann, wenn während der Abwärtsbewegung zum Einlegen in den Packungsbestandteil die Lasche von der Faltkontur am Einlegebereich der Verpackungsmaschine beaufschlagt wird.

Bei dem anderen Konzept der Erfindung erfolgt das Verschwenken der Lasche durch die Übergabeeinrichtung selbst. Hierzu ist die Übergabeeinrichtung mit einer integrierten Schwenkeinrichtung versehen. Auch hier zeichnet sich die Übergabeeinrichtung außerdem dadurch aus, dass eine Halteeinrichtung vorgesehen ist, die an oder im Bereich der Knicklinie eines jeweiligen aufliegenden Trägers wirksam ist und so dafür sorgt, dass der Träger nicht abhebt, wenn dessen Lasche verschwenkt wird.

Es sind Übergabeeinrichtungen in Form von Robotergreifern bekannt, die mit einem Niederhalter versehen sind. Hierbei handelt es sich jedoch um Produktniederhalter, die ein Produkt beim Aufnehmen gegen Verrutschen sichern, wenn Schaufeln des Greifers unter das Produkt geschoben werden. Ferner dienen derartige Niederhalter dazu, ein aufgenommenes Produkt während des Transfers beispielsweise von einem Aufnahmebereich zu einem Einlegebereich zu fixieren. Derartige Niederhalter können auch eingesetzt werden, wenn die zu handhabenden Produkte auf Trägern der hier in Rede stehenden Art aufliegen, wobei diese Niederhalter aber nicht gezielt an oder im Bereich der Knicklinie zwischen Basis und Lasche wirksam sind, um den Träger gegen Abheben zu sichern.

Unabhängig davon, ob die Lasche durch Zusammenwirken mit einer am Einlegebereich der Verpackungsmaschine vorgesehenen Faltkontur oder mittels einer in die Übergabeeinrichtung integrierten Schwenkeinrichtung verschwenkt wird, sorgt die gezielt an der richtigen Stelle, also an oder im Bereich der Knicklinie, wirksame Halteeinrichtung dafür, dass der Träger gegen Abheben gesichert wird, wenn dessen Lasche verschwenkt wird.

Dementsprechend zeichnet sich die erfindungsgemäße Übergabeeinrichtung (Anspruch 5) dadurch aus, dass sie zusätzlich zu einer Auflage für einen jeweiligen Träger eine Halteeinrichtung aufweist, die dazu angeordnet und ausgebildet ist, den Träger gegen Abheben von der Auflage zu sichern. Wie an anderer Stelle näher ausgeführt wird, wird die Auflage von zumindest einer Schaufel gebildet, die unter die Basis eines jeweiligen Trägers bringbar ist, um den Träger aufzunehmen. Insbesondere wird dabei die Auflage von zwei relativ zueinander zwischen einer offenen Stellung und einer geschlossenen Stellung bewegbaren Schaufeln gebildet.

Eine solche Übergabeeinrichtung kann gemäß dem einen erfindungsgemäßen Konzept (Anspruch 1) eingesetzt werden, um die Lasche eines jeweiligen aufgenommenen Trägers mittels der Faltkontur am Einlegebereich der Verpackungsmaschine zu verschwenken. Die Übergabeeinrichtung benötigt dann keine integrierte Schwenkeinrichtung. In einer möglichen Weiterbildung kann die Übergabeeinrichtung mit einer integrierten Schwenkeinrichtung versehen sein, die dazu ausgebildet ist, die Lasche eines jeweiligen aufgenommenen und mittels der Halteeinrichtung gegen Abheben gesicherten Trägers relativ zur Basis zu verschwenken.

Die erfindungsgemäße Verpackungsmaschine (Anspruch 10) zeichnet sich unter anderem dadurch aus, dass der Einlegebereich eine oder mehrere parallele Einlegezeilen umfasst, entlang welcher die Packungsbestandteile in einer Transportrichtung durch den Einlegebereich bewegbar sind und welche jeweils einen oder mehrere Einlegeplätze aufweisen, an dem ein jeweiliger Träger samt aufliegendem Produkt von der Übergabeeinrichtung in einen Packungsbestandteil einlegbar ist. Seitlich neben jedem Einlegeplatz ist ein nach oben über das Niveau eines jeweiligen Packungsbestandteils hinaus vorstehender Faltanschlag angeordnet, der mit seiner Oberseite und seiner dem Einlegeplatz zugewandten Innenseite eine Faltkontur definiert, an welcher ein jeweiliger Träger während der Abwärtsbewegung mit seiner Lasche anschlägt und durch welche die Lasche relativ zur Basis verschwenkt wird.

Diese Verpackungsmaschine kann also bei dem erstgenannten Konzept des erfindungsgemäßen Verfahrens (Anspruch 1) zum Einsatz kommen, bei dem die Übergabeeinrichtung mit ihrer Halteeinrichtung und die Verpackungsmaschine mit der Faltkontur am Einlegebereich zusammenwirken, um die Lasche eines jeweiligen Trägers zu verschwenken.

Wenn die Übergabeeinrichtung eine integrierte Schwenkeinrichtung zum Verschwenken der Lasche eines jeweiligen Trägers aufweist, dann kann durch dieses Verschwenken entweder ein Falten des Trägers oder ein Vorfalten des Trägers erfolgen. Mit "Vorfalten" ist in diesem Zusammenhang gemeint, dass die Lasche mittels der integrierten Schwenkeinrichtung in eine Stellung relativ zur Basis verschwenkt wird, in der - in Abhängigkeit von der konkreten Ausgestaltung einer am Einlegebereich der Verpackungsmaschine angeordneten Faltkontur - die Lasche während der Abwärtsbewegung zum Einlegen in einen jeweiligen Packungsbestandteil zusätzlich durch Zusammenwirken mit der Faltkontur verschwenkt, also über eine zuvor mittels der in die Übergabeeinrichtung integrierten Schwenkeinrichtung erhaltene Schwenkstellung hinaus weiter verschwenkt wird.

Es können also die integrierte Schwenkeinrichtung der Übergabeeinrichtung und die am Einlegebereich der Verpackungsmaschine angeordnete Faltkontur nacheinander, im Ergebnis gemeinsam für ein Verschwenken der Lasche sorgen.

Generell ist im Rahmen der vorliegenden Offenbarung unter einer Abwärtsbewegung nicht ausschließlich eine reine Vertikalbewegung der Übergabeeinrichtung zu verstehen. Die Übergabeeinrichtung kann bei ihrer Bewegung zum Einlegen eines jeweiligen Trägers in den Packungsbestandteil auch Bewegungen mit einer horizontalen Komponente ausführen, z.B. wie an anderer Stelle in Verbindung mit Ausführungsbeispielen erwähnt. Auch kann die Übergabeeinrichtung bei ihrer Einlege-Bewegung in Abhängigkeit von den jeweiligen Gegebenheiten eine kurze Bewegung nach oben ausführen. Da aber insgesamt ein Einlegen des Trägers erfolgt, die Übergabeeinrichtung also im Moment des Einlegens sich auf einem tieferen Niveau befindet als beim Eintreten in den Einlegebereich der Verpackungsmaschine, findet insgesamt eine Abwärtsbewegung statt, weshalb diese Bezeichnung für die Bewegung der Übergabeeinrichtung gewählt wird.

Vorteilhafte Weiterbildungen der vorstehend erläuterten Verfahren, der Übergabeeinrichtung und der Verpackungsmaschine sind auch in den abhängigen Ansprüchen, der Zeichnung sowie der nachfolgenden Beschreibung angegeben.

Im Folgenden sind mögliche Weiterbildungen der erfindungsgemäßen Verfahren angegeben.

Die Bewegung der Übergabeeinrichtung im Einlegebereich kann grundsätzlich beliebig verlaufen. Eine reine Querbewegung bis oberhalb eines jeweiligen Einlegeplatzes, gefolgt von einer reinen Abwärtsbewegung zum Einlegen eines jeweiligen Trägers, ist möglich, aber nicht zwingend. Insbesondere um die Lasche eines jeweiligen Trägers sicher an die Faltkontur heranzuführen, kann zum Beispiel vorgesehen sein, dass die Übergabeeinrichtung zunächst schräg von oben nach unten an die Faltkontur heran und dann zumindest im Wesentlichen ausschließlich vertikal nach unten bewegt wird, wobei - wie an anderer Stelle beschrieben - weitere Bewegungen in Querrichtung nicht ausgeschlossen sind, beispielsweise im Zusammenhang mit einem abschließenden Fallenlassen der Trägers am Ende eines jeweiligen Einlegevorgangs.

In einigen Ausführungsbeispielen kann vorgesehen sein, dass die Lasche in eine Stellung verschwenkt wird, in der die Lasche einen Winkel von zumindest näherungsweise 90° mit der Basis einschließt. Aus einer solchen Stellung heraus kann die Lasche bei Weitertransport des Packungsbestandteils durch Mittel der Verpackungsmaschine weiter in Richtung der Basis verschwenkt werden, beispielsweise durch einen im Einlegebereich oder - bezogen auf die Transportrichtung - im Anschluss an den Einlegebereich angeordneten Schwenkanschlag, der eine sich in Transportrichtung verändernde Schwenkkontur definiert. Hierauf wird an anderer Stelle näher eingegangen.

Die Übergabeeinrichtung kann derart ausgebildet sein, dass sie sich bei ihrer Abwärtsbewegung auf einer von der Faltkontur abhängigen, von einer reinen Vertikalbewegung abweichenden Faltbahn bewegt und dabei die Lasche an einem nicht vertikal verlaufenden Wirkabschnitt der Faltkontur ausrichtet, um die Lasche über einen Winkel von 90° hinaus in Richtung der Basis zu verschwenken. Beispielsweise können in horizontaler Richtung verlaufende Querbewegungen der Übergabeeinrichtung gezielt dazu eingesetzt werden, um durch ein Zusammenspiel mit der entsprechend geformten Faltkontur die Lasche auch über einen Winkel von 90° zur Basis hinaus zu verschwenken und auf diese Weise ein gegebenenfalls erforderliches Weiterverschwenken der Lasche zu erleichtern oder zu vereinfachen.

Wenn gemäß einer bevorzugten Ausgestaltung die Faltkontur eine passive, stationär angeordnete Einrichtung an der Verpackungsmaschine ist, dann ist die Position der Faltkontur relativ zu dem jeweiligen Packungsbestandteil bekannt. Folglich kann die Übergabeeinrichtung für ein entsprechendes Zusammenspiel mit der Faltkontur programmiert werden, um sich automatisch auf der erforderlichen Faltbahn zu bewegen. Die Übergabeeinrichtung benötigt also keine Sensoren wie beispielsweise Kameras, um im Sinne einer autonomen Bewegung durch Umgebungserkennung das jeweils erforderliche Zusammenwirken mit der Faltkontur zu bewerkstelligen. Grundsätzlich ist aber ein solches autonomes Bewegen durch Umgebungserkennung für die Übergabeeinrichtung in einer alternativen Weiterbildung möglich.

In einigen Ausführungsbeispielen kann vorgesehen sein, dass durch das Bewegen der Übergabeeinrichtung auf der Faltbahn die Halteeinrichtung die Knicklinie entlang zumindest eines zur Vertikalen geneigten oder gekrümmt verlaufenden Wirkabschnitts der Faltkontur und/oder entlang eines eine Hinterschneidung oder einen Vorsprung bildenden Wirkabschnitts der Faltkontur bewegt. Die Ausgestaltung der Faltkontur schafft folglich vielfältige Möglichkeiten, um durch das Zusammenwirken von Übergabeeinrichtung und Faltkontur eine jeweils gewünschte Relativstellung zwischen Lasche und Basis zu erreichen.

Durch Bewegen der Übergabeeinrichtung und/oder durch Bewegen der Halteeinrichtung relativ zu der Aufnahme, insbesondere zu einer oder mehreren die Aufnahme bildenden Schaufeln, kann der Abstand der Halteeinrichtung, insbesondere einer an oder im Bereich der Knickline des Trägers wirksamen Haltekante der Halteeinrichtung, zur Faltkontur verändert werden. Derartige Querbewegungen können als Zusatzbewegungen vorgesehen werden und insbesondere die Abwärtsbewegung der Übergabeeinrichtung überlagern. Dies ist aber nicht zwingend, denn Querbewegungen der Übergabeeinrichtung oder der Halteeinrichtung können auch ohne gleichzeitige Abwärtsbewegung der Übergabeeinrichtung erfolgen. Solche Bewegungen der Übergabeeinrichtung bzw. der Halteeinrichtung in Querrichtung oder mit einer Komponente in Querrichtung können für ein jeweiliges Zusammenwirken mit der Faltkontur genutzt werden, zum Beispiel beim abschließenden Freigeben eines jeweiligen Trägers, insbesondere beim Bewegen zweier die Auflage bildenden Schaufeln in die offene Stellung. Hierdurch kann zum Beispiel sichergestellt werden, dass der Träger, insbesondere dessen Lasche, nicht zwischen der Faltkontur und der Halteeinrichtung eingeklemmt wird, so dass der Träger zuverlässig in den Packungsbestandteil fallen kann. Alternativ oder zusätzlich kann auch die Faltkontur bewegbar ausgeführt sein, um relativ zu der Aufnahme bewegt zu werden und so den Abstand zur Halteeinrichtung zu verändern.

Des Weiteren kann vorgesehen sein, dass die Lasche nach dem Einlegen in den Packungsbestandteil durch die Faltkontur gegen ein Zurückschwenken gesichert wird. Die Faltkontur kann also derart relativ zu dem jeweiligen Packungsbestandteil angeordnet sein, dass die Faltkontur die Lasche an einem unerwünschten Zurückschwenken hindert. Die Faltkontur kann sich in Transportrichtung über den gesamten oder zumindest entlang eines wesentlichen Teils des Einlegebereichs erstrecken, so dass auch bei einem Weitertransport nach Einlegen des Trägers in einen Packungsbestandteil die Faltkontur ihre Sicherungsfunktion zur Verhinderung eines Zurückschwenkens der Lasche beibehalten kann.

Wie eingangs erwähnt, kann in einigen Ausführungsbeispielen vorgesehen sein, dass der Träger bei Weiterbewegung des Packungsbestandteils in der Verpackungsmaschine an einer Schwenkkontur der Verpackungsmaschine vorbeibewegt und dabei die Lasche durch Zusammenwirken mit der Schwenkkontur weiter in Richtung der Basis verschwenkt wird. Beispielsweise kann die Schwenkkontur eine in Transportrichtung gesehen in der Höhe abnehmende Wirkfläche umfassen, welche die bereits durch Zusammenwirken von Übergabeeinrichtung und Faltkontur vorgefaltete Lasche nach unten in Richtung der Basis und insbesondere in Anlage an das auf der Basis des Trägers aufliegende Produkt drückt. Die Formgebung dieser sozusagen in einer Art "Falt-Tunnel" ausgebildeten Schwenkkontur kann derart erfolgen, dass die zu Beginn beispielsweise senkrecht nach oben stehende oder allenfalls geringfügig in Richtung der Basis geneigte Lasche zuverlässig aufgenommen, also gewissermaßen "eingefädelt" wird, um dann durch eine beispielsweise entsprechend gewundene Wirkfläche der Schwenkkontur weiter nach unten gefaltet zu werden.

In manchen Ausführungsbeispielen kann vorgesehen sein, dass mittels der Halteeinrichtung oder mittels einer zusätzlich in die Übergabeeinrichtung integrierten Positioniereinrichtung bei aufgenommenem Träger ein jeweils aufliegendes Lebensmittelprodukt relativ zu dem Träger verschoben wird. Auf diese Weise kann insbesondere dafür gesorgt werden, dass ein die Knicklinie zumindest teilweise bedeckendes Produkt von der Knicklinie geschoben wird, damit die Knicklinie freiliegt und so die Lasche ohne Störung des Produkts gefaltet werden kann. Dies kann beispielsweise mittels der Halteeinrichtung erfolgen, indem diese relativ zur Auflage der Übergabeeinrichtung, insbesondere also zu der Schaufel oder zu den Schaufeln eines Robotergreifers, bewegt werden kann, oder indem die Übergabeeinrichtung als Ganzes vor Aufnahme eines jeweiligen Trägers relativ zu dem Träger bewegt wird, um die Halteeinrichtung nach Art eines Schiebers oder Rechens einzusetzen und das jeweilige Produkt von der Knicklinie zu schieben, so dass das Produkt korrekt auf der Basis des Trägers positioniert ist.

Alternativ kann eine zusätzliche Positioniereinrichtung vorgesehen sein, die relativ zu der Auflage der Übergabeeinrichtung und zur Halteeinrichtung bewegbar ist. Mit einer solchen zusätzlich in die Übergabeeinrichtung integrierten Positioniereinrichtung kann ein auf dem Träger aufliegendes Produkt beispielsweise gegen die Halteeinrichtung geschoben werden, um auf diese Weise eine sich an der Halteeinrichtung bzw. an der Knicklinie orientierende Positionierung des Produkts auf dem Träger zu erreichen.

Im Folgenden sind mögliche Weiterbildungen der erfindungsgemäßen Übergabeeinrichtung angegeben.

In einigen Ausführungsbeispielen kann vorgesehen sein, dass die Halteeinrichtung außermittig angeordnet ist. An anderer Stelle wurde bereits erwähnt, dass die Übergabeeinrichtung mit einem Produktniederhalter versehen sein kann, der das Produkt bei Aufnahme des Trägers und/oder beim Transfer des Trägers zum Einlegebereich fixiert. Bei derart ausgestalteten Übergabeeinrichtungen kann die Halteeinrichtung in dem Sinne außermittig angeordnet sein, dass sie seitlich neben einem solchen Produktniederhalter angeordnet ist.

Unabhängig davon, ob die Halteeinrichtung in dem vorstehend genannten Sinne außermittig angeordnet ist oder nicht, und auch unabhängig davon, ob ein Produktniederhalter vorgesehen ist oder nicht, kann zusätzlich zu der an oder im Bereich der Knicklinie wirksamen Halteeinrichtung eine weitere Halteeinrichtung vorgesehen sein, die fest angeordnet oder verstellbar sein kann, wobei diese weitere Halteeinrichtung dazu dient, den Träger an einer von der Knicklinie beabstandeten Stelle zu beaufschlagen, um den Träger gegen ein Abheben oder Verrutschen oder Verdrehen zu sichern.

Die Übergabeeinrichtung kann auf der Seite der Halteeinrichtung einen freien Schwenkbereich aufweisen, in welchem die Halteeinrichtung das am weitesten außen gelegene Bauteil der Übergabeeinrichtung ist. Eine derartige asymmetrische Ausgestaltung der Übergabeeinrichtung kann insbesondere durch die erwähnte außermittige Anordnung der Halteeinrichtung erfolgen. Diese Asymmetrie ermöglicht es insbesondere, dass die Übergabeeinrichtung sicher und zuverlässig bei der Abwärtsbewegung am Einlegebereich an der Faltkontur vorbeibewegt werden kann, da während dieser Abwärtsbewegung die Halteeinrichtung das der Faltkontur am nächsten gelegene Bauteil ist. Für diese Abwärtsbewegung kann es für die Praxis wünschenswert sein, dass die Knicklinie möglichst nahe an der Faltkontur entlangbewegt wird, um ein zuverlässiges Falten der Lasche in die jeweils vorgegebene Stellung zu erzielen.

Wie an anderer Stelle bereits erwähnt, kann die Auflage der Übergabeeinrichtung von zumindest einer Schaufel gebildet sein, die dazu ausgebildet ist, unter die Basis eines jeweiligen Trägers gebracht zu werden, um so den Träger aufzunehmen.

In einigen Ausführungsbeispielen kann die Auflage von zwei relativ zueinander in einer Richtung parallel zur Längsachse der Übergabeeinrichtung zwischen einer offenen Stellung und einer geschlossenen Stellung bewegbaren Schaufeln gebildet sein. Die oder jede Schaufel kann gabelartig ausgebildet sein und z.B. eine Mehrzahl von zinkenartigen Aufnahmeabschnitten aufweisen.

Was mögliche Weiterbildungen der Halteeinrichtung der Übergabeeinrichtung anbetrifft, so kann vorgesehen sein, dass die Halteeinrichtung eine der Auflage zugewandte, parallel zur Längsachse der Übergabeeinrichtung verlaufende Haltekante aufweist. Hierdurch erfolgt das Sichern des Trägers gegen Abheben nicht mittels eines flächigen Bereiches der Halteeinrichtung, sondern mit einer Haltekante, also einem linienförmigen Haltebereich. Mittels einer solchen Haltekante kann die Halteeinrichtung gezielt direkt an der Knicklinie wirksam sein. Dabei ist es möglich, aber nicht zwingend erforderlich, dass die Halteeinrichtung mit ihrer Haltekante den Träger an der Knicklinie oder im Bereich der Knicklinie lediglich berührend oder unter Aufbringung von Druck beaufschlagt. Grundsätzlich genügt es, wenn sich die Halteeinrichtung - unabhängig davon, ob sie mit einer Haltekante versehen ist oder nicht - in einem gewissen Abstand oberhalb des Trägers befindet. Eine Sicherung gegen Abheben kann auch bei einer solchen Beabstandung erfolgen, also auch dann, wenn für den Träger ein gewisses Spiel in vertikaler Richtung besteht.

Wenn die Halteeinrichtung mit einer Haltekante versehen ist, dann kann diese sich seitlich außerhalb der Auflage der Halteeinrichtung erstrecken. Auf diese Weise ist die dann entsprechend asymmetrisch ausgebildete Übergabeeinrichtung gewissermaßen unterteilt, und zwar in einen die Auflage zur Aufnahme des Trägers umfassenden Aufnahmebereich und in einen seitlich daneben befindlichen, die Halteeinrichtung umfassenden Haltebereich.

Um bei der Abwärtsbewegung zum Einlegen in einen jeweiligen Packungsbestandteil die Knicklinie des Trägers möglichst nahe entlang der Faltkontur zu bewegen und dabei gleichzeitig mit der Übergabeeinrichtung und insbesondere der Halteeinrichtung ausreichend Abstand von der Faltkontur zu halten, damit Kollisionen zwischen Übergabeeinrichtung und Faltkontur sicher vermieden werden, kann die Halteeinrichtung entsprechend geformt sein. Insbesondere kann in diesem Zusammenhang vorgesehen sein, dass die Halteeinrichtung in einem oberen Bereich gegenüber einem die Haltekante umfassenden unteren Bereich in einer Richtung quer zur Längsrichtung nach innen zurückgesetzt ist. Insbesondere kann die Halteeinrichtung einen nach außen abgewinkelten unteren Bereich aufweisen, dessen freies unteres Ende von der Haltekante gebildet ist.

In einer vergleichsweise einfachen, gleichwohl sicher und zuverlässig funktionierenden Ausgestaltung kann die Halteeinrichtung von einem Blechteil gebildet sein, das sich beispielsweise in einem oberen Bereich, mit welchem es an der Übergabeeinrichtung befestigt ist, vertikal nach unten erstreckt und in einem unteren Bereich in einen nach außen abgewinkelten Abschnitt übergeht, dessen unteres Ende die Haltekante bildet. Bei gleicher oder zumindest im Wesentlichen gleicher Funktionalität kann die Halteeinrichtung alternativ aus Kunststoff hergestellt sein.

Die Haltekante kann einen geradlinigen Verlauf aufweisen. In alternativen Ausgestaltungen kann vorgesehen sein, dass die Haltekante mit einer Haltekontur versehen ist, die eine Mehrzahl von auf einer Linie liegenden Vorsprüngen aufweist. Insbesondere kann diese Haltekontur gewellt oder gezahnt oder gezackt ausgebildet sein.

Mit einer eine derart ausgestaltete Haltekante aufweisenden Halteeinrichtung kann ein jeweiliger Träger an seiner Knicklinie punktuell beaufschlagt und so besonders zuverlässig gegen Abheben gesichert werden. In vertikaler Richtung bezüglich der Auflage kann die Halteeinrichtung derart positioniert sein, dass beim Absenken der Übergabeeinrichtung zum Aufnehmen eines jeweiligen Trägers die Halteeinrichtung mit der erwähnten, an ihrer Haltekante ausgebildeten Haltekontur den Träger an der Knicklinie beaufschlagt. Nicht bereits in geeigneter Weise an der Knicklinie vorgeschwächte Träger können so mittels der Haltekontur gezielt geschwächt, beispielsweise eingedrückt oder perforiert, werden, um das nachfolgende Verschwenken der Lasche relativ zur Basis des Trägers zu erleichtern.

In einigen Ausführungsbeispielen kann vorgesehen sein, dass die Halteeinrichtung zumindest näherungsweise in einer Ebene wirksam ist, die durch eine Auflagefläche der Auflage definiert ist. Hierdurch kann auf besonders wirksame Weise erreicht werden, dass die Halteeinrichtung zum Beispiel mit einem kantenförmigen freien Ende den Träger beaufschlagen kann, um z.B. die vorstehend erwähnte Schwächung des Trägers an der Knicklinie zu erzeugen.

Unabhängig von der konkreten Ausgestaltung der Halteeinrichtung kann vorgesehen sein, dass diese sich ausgehend von einem Tragabschnitt der Übergabeeinrichtung nach unten erstreckt und an ihrem freien Ende mit der Haltekante versehen ist.

Die Haltekante kann zum Beispiel scharfkantig oder abgerundet ausgebildet sein.

Die Halteeinrichtung kann zumindest bereichsweise tafelförmig, d.h. flächig, ausgebildet sein. Beispielsweise kann die Halteeinrichtung, wie bereits erwähnt, von einem Blechteil gebildet sein.

Die Halteeinrichtung und/oder die Anbringung der Halteeinrichtung an der Übergabeeinrichtung kann in einigen Ausführungsbeispielen derart ausgestaltet sein, dass die Halteeinrichtung in einer Richtung quer zur Längsachse unter elastischer Verformung auslenkbar ist. Durch entsprechende Bewegung der Übergabeeinrichtung und/oder durch entsprechende Formung der Faltkontur am Einlegebereich kann dadurch erreicht werden, dass die Halteeinrichtung bei der Abwärtsbewegung nach innen gegen eine Rückstellkraft ausgelenkt wird, welche die Halteeinrichtung und somit den von ihr beaufschlagten oder gesicherten Träger in eine Hinterschneidung der Faltkontur hineinbewegt, die in einem unteren Bereich der Haltekontur ausgebildet ist und im Verlauf der weiteren Abwärtsbewegung der Übergabeeinrichtung erreicht wird. Hierzu muss keine Querbewegung der Übergabeeinrichtung auf die Faltkontur zu oder von der Faltkontur weg erfolgen.

Beispielsweise durch eine Einlaufschräge an der Faltkontur kann erreicht werden, dass bei der Abwärtsbewegung die Halteeinrichtung zunächst ausgelenkt und dann an einer weiter unten gelegenen Stelle in eine Hinterschneidung der Faltkontur hinein zurückfedert und dabei den die Knicklinie umfassenden Bereich des Trägers in die Hinterschneidung hineindrückt, wodurch bei entsprechender Formgebung der Hinterschneidung die Lasche automatisch weiter in Richtung der Basis verschwenkt wird.

Zusätzlich oder anstelle einer Hinterschneidung kann die Faltkontur einen Vorsprung als Wirkabschnitt aufweisen, der schräg oder gekrümmt verläuft. Der Vorsprung kann zum Beispiel zwei aufeinander folgende Teilabschnitte aufweisen, die jeweils entweder schräg oder gekrümmt verlaufen, wobei ein oberer Teilabschnitt nach innen führt und in einen wieder zurück nach außen führenden unteren Teilabschnitt übergeht. Auch eine solcher Vorsprung kann mit seinem unteren Teilabschnitt dazu dienen, die Lasche eines jeweiligen Trägers über einen Winkel von 90° relativ zur Basis des Trägers hinaus zu verschwenken, indem der die Knicklinie des Trägers umfassende Bereich mittels der Halteeinrichtung der Übergabeeinrichtung während der Abwärtsbewegung entlang des Vorsprungs bewegt wird und dabei in den Bereich des unteren Teilabschnitt des Vorsprungs gelangt, der diesbezüglich wie eine Hinterschneidung wirksam ist. Ein Vorsprung hat gegenüber einer Hinterschneidung den Vorteil, dass die Gefahr eines Hängenbleibens oder Verhakens praktisch auf Null reduziert ist. Eine Querbewegung der Übergabeeinrichtung auf die Faltkontur zu oder von der Faltkontur weg muss auch hier nicht erfolgen, da der obere Teilabschnitt des Vorsprungs für die Auslenkung der Halteeinrichtung sorgt.

Wie an anderer Stelle bereits erwähnt, kann die Übergabeeinrichtung in einigen Ausführungsbeispielen mit einer Positioniereinrichtung versehen sein, die dazu ausgebildet ist, bei aufgenommenem Träger ein jeweils aufliegendes Lebensmittelprodukt relativ zu dem Träger zu verschieben.

Wie ebenfalls bereits erwähnt, kann in die Übergabeeinrichtung zumindest eine Schwenkeinrichtung integriert sein, die dazu ausgebildet ist, die Lasche eines jeweiligen aufgenommenen und mittels der Halteeinrichtung gegen Abheben gesicherten Trägers relativ zur Basis zu verschwenken.

Dabei kann die Schwenkeinrichtung zum Verschwenken der Lasche zu einer Arbeitsbewegung zwischen einer Ausgangsstellung und einer Endstellung antreibbar sein. Bei der Arbeitsbewegung kann es sich um eine Linearbewegung oder um eine Drehbewegung oder um eine Schwenkbewegung handeln. Insbesondere im Falle einer Linearbewegung kann als Antrieb für die Schwenkeinrichtung eine Anordnung mit einem oder mehreren Pneumatikzylindern vorgesehen sein.

Die Schwenkeinrichtung kann eine außerhalb eines freien Schwenkbereiches der Übergabeeinrichtung angeordnete Halterung für ein nach innen vorstehendes, insbesondere langgestrecktes, Schwenkorgan zum Verschwenken der Lasche umfassen.

Des Weiteren kann vorgesehen sein, dass die Schwenkeinrichtung in einer Richtung parallel zur Längsachse der Übergabeeinrichtung zwischen einer außerhalb eines freien Schwenkbereiches der Übergabeeinrichtung gelegenen passiven Stellung und einer aktiven Stellung bewegbar ist.

Die passive Stellung der Schwenkeinrichtung ermöglicht ein ungestörtes Positionieren der Übergabeeinrichtung relativ zu dem Träger, woraufhin die Schwenkeinrichtung in die aktive Stellung bewegt werden kann, um so insbesondere eine Ausgangsstellung herzustellen, ausgehend von welcher durch Antreiben der Schwenkeinrichtung die Lasche durch Bewegen der Schwenkeinrichtung in ihre Endstellung verschwenkt werden kann.

Die Schwenkeinrichtung kann an der Auflage der Übergabeeinrichtung angebracht sein, insbesondere an einer die Auflage bildenden Schaufel. Hierdurch kann eine insbesondere zum Aufnehmen des Trägers erfolgende Bewegung der Schaufel genutzt werden, um gleichzeitig die Schwenkeinrichtung von einer passiven Stellung in eine aktive Stellung zu bewegen.

In einigen Ausführungsbeispielen kann vorgesehen sein, dass die Auflage von zwei relativ zueinander in einer Richtung parallel zur Längsachse zwischen einer offenen Stellung und einer geschlossenen Stellung bewegbaren Schaufeln gebildet ist, wobei jede Schaufel eine Schwenkeinrichtung trägt, und wobei sich die Schwenkeinrichtungen bei in der offenen Stellung befindlichen Schaufeln in ihren passiven Stellungen und bei in der geschlossenen Stellung befindlichen Schaufeln in ihren aktiven Stellungen befinden.

Nachstehend sind mögliche Weiterbildungen der erfindungsgemäßen Verpackungsmaschine angegeben.

Der seitlich neben jedem Einlegeplatz angeordnete Faltanschlag kann von der Verpackungsmaschine abnehmbar ausgebildet sein. Für den Fall, dass Produkte mit Produktträgern ohne zu verschwenkende Lasche oder Produkte ohne Produktträger zu verpacken sind, kann folglich die Verpackungsmaschine durch Abnehmen des Faltanschlags umgerüstet werden, so dass der Faltanschlag beim Einlegen der anderen Produkte bzw. Produktträger nicht stört.

Des Weiteren kann vorgesehen sein, dass die Position des Faltanschlags relativ zu dem jeweiligen Einlegeplatz verstellbar ist. Hierdurch kann eine Anpassung an die Träger und/oder an die Packungsbestandteile und/oder an die Position der Packungsbestandteile an den Einlegeplätzen erfolgen.

In einigen Ausführungsbeispielen kann vorgesehen sein, dass der Faltanschlag auf der vom Aufnahmebereich abgewandten Seite des jeweiligen Einlegeplatzes angeordnet ist.

Der Faltanschlag kann als eine sich in Transportrichtung erstreckende Faltleiste ausgebildet sein. Insbesondere kann sich die Faltleiste über mehrere Einlegeplätze der jeweiligen Einlegezeile erstrecken.

In der Praxis arbeiten Verpackungsmaschinen häufig formatweise, wobei ein Format typischerweise von einem mehrzeiligen und mehrspaltigen Array von Packungsbestandteilen gebildet wird, die gemeinsam in der Verpackungsmaschine gehandhabt werden, beispielsweise gemeinsam durch Tiefziehen hergestellt, gemeinsam in einem Einlegebereich mit Produkten bestückt und gemeinsam in einer Siegelstation der Verpackungsmaschine mittels einer Materialbahn, insbesondere einer so genannten Oberfolie, verschlossen werden.

Dementsprechend kann bei der erfindungsgemäßen Verpackungsmaschine vorgesehen sein, dass der Einlegebereich mehrere Einlegezeilen jeweils mit mehreren Einlegeplätzen umfasst, wobei an jeder Einlegezeile eine sich über mehrere Einlegeplätze erstreckende Faltleiste angeordnet ist. Für ein jeweiliges Format ist dann also eine der Anzahl von Einlegezeilen entsprechende Anzahl von Faltleisten vorgesehen. Dabei ist insbesondere eine jeweilige Faltleiste auf der vom Aufnahmebereich abgewandten Seite der betreffenden Einlegezeile angeordnet.

Die möglichen Ausgestaltungen der Faltkontur sind vielfältig und können in Abhängigkeit davon gewählt werden, wie in einer jeweiligen Anwendung die Lasche des Produktträgers verschwenkt werden soll.

So kann beispielsweise vorgesehen sein, dass die Faltkontur ausschließlich, insbesondere mit Ausnahme eines abgeschrägten oder abgerundeten Einlaufabschnitts an der Oberseite des Faltanschlags, vertikal verläuft, oder dass die Faltkontur einen vertikal verlaufenden Wirkabschnitt umfasst.

Alternativ oder zusätzlich kann vorgesehen sein, dass die Faltkontur zumindest in einem oberen Bereich einen zum jeweiligen Einlegeplatz hin gerichteten, nicht vertikal verlaufenden Wirkabschnitt umfasst, der zumindest teilweise schräg oder gekrümmt verläuft. Ein solcher Wirkabschnitt kann beispielsweise dazu dienen, wie an anderer Stelle bereits erwähnt, die Halteeinrichtung der Übergabeeinrichtung gegen eine Rückstellkraft auszulenken. Ein solcher Wirkabschnitt kann alternativ oder zusätzlich als Einlaufabschnitt dienen, der eine zu einer Blockade oder Beschädigung führende Kollision der Halteeinrichtung bei sich abwärts bewegender Übergabeeinrichtung mit der Faltkontur sicher verhindert.

Des Weiteren kann in manchen Ausführungsbeispielen vorgesehen sein, dass die Faltkontur an der Innenseite des Faltanschlags zumindest einen als Hinterschneidung ausgebildeten Wirkabschnitt umfasst. Eine solche Hinterschneidung kann, wie an anderer Stelle erläutert, insbesondere dazu dienen, die Lasche eines jeweiligen Trägers über einen Winkel von 90° relativ zur Basis des Trägers hinaus zu verschwenken, indem der die Knicklinie des Trägers umfassende Bereich mittels der Halteeinrichtung der Übergabeeinrichtung während der Abwärtsbewegung in Richtung des jeweiligen Packungsbestandteils gezielt in die Hinterschneidung hineinbewegt wird. Ein entsprechender Effekt kann - wie vorstehend bereits erläutert - auch mit einem als Vorsprung ausgebildeten Wirkabschnitt erreicht werden.

Wie ebenfalls bereits erwähnt, kann die Lasche eines bereits in einen jeweiligen Packungsbestandteil eingelegten Trägers ohne Mitwirkung der Faltkontur oder der Übergabeeinrichtung weiter in Richtung der Basis verschwenkt werden, indem im Einlegebereich oder - bezogen auf die Transportrichtung - im Anschluss an den Einlegebereich der Verpackungsmaschine für die oder jede Einlegezeile an der Verpackungsmaschine ein z.B. als "Falt-Tunnel" ausgebildeter Schwenkanschlag angeordnet ist, der eine sich in Transportrichtung verändernde Schwenkkontur definiert. Diese Schwenkkontur ist derart geformt, dass bei Vorbeibewegen eines in einen Packungsbestandteil eingelegten jeweiligen Trägers dessen Lasche durch Zusammenwirken mit der Schwenkkontur weiter in Richtung der Basis des Trägers verschwenkt wird.

Der Aufnahmebereich der Verpackungsmaschine kann eine Fördereinrichtung umfassen, über welche die Träger jeweils samt aufliegendem Produkt zuführbar sind und welche zumindest im Aufnahmebereich eine gewölbte Auflage oder eine Auflage mit reduzierter Breite für die Träger aufweist, wobei diese Auflage einen beiderseitigen Überstand der Träger ermöglicht. Durch eine solche Ausgestaltung der Fördereinrichtung kann ein sicheres und zuverlässiges Aufnehmen der zugeführten Träger mittels der Übergabeeinrichtung sichergestellt werden.

Die Fördereinrichtung kann ein Endlosfördermittel, insbesondere ein - auch als Bandgurt bezeichnetes - Förderband oder eine Mehrzahl von parallelen Förderriemen umfassen, welches im Aufnahmebereich über eine Wölbungskulisse mit gegenüber dem Endlosfördermittel reduzierter Breite geführt ist. Durch eine solche Kulisse kann gezielt eine Wölbung im Förderband oder in der Gesamtheit der parallelen Förderriemen derart erzeugt werden, dass die Träger jeweils auf dem Fördermittel aufliegen, dabei aber seitlich überstehen, um eine sichere und zuverlässige Aufnahme mittels der Übergabeeinrichtung zu gewährleisten.

Die Wölbungskulisse kann eine oder mehrere in Transportrichtung verlaufende Erhöhungsleisten für das Endlosfördermittel umfassen, wobei diese Erhöhungsleisten jeweils eine Auflauframpe, eine Auslauframpe und dazwischen einen erhöhten Auflageabschnitt für das Endlosfördermittel umfassen.

Des Weiteren kann bei manchen Ausführungsbeispielen vorgesehen sein, dass auf der vom Einlegebereich der Verpackungsmaschine abgewandten Seite des Aufnahmebereiches wenigstens ein Pufferplatz für zumindest einen Träger angeordnet ist, wobei ein jeweiliger Träger bedarfsweise mittels der Übergabeeinrichtung auf dem Pufferplatz ablegbar und vom Pufferplatz aufnehmbar ist.

Auf einem solchen Pufferplatz kann ein dem Aufnahmebereich zugeführter Träger erforderlichenfalls mittels der Übergabeeinrichtung geparkt werden, wenn vorübergehend mehr Träger zugeführt werden als in die Packungsbestandteile am Einlegebereich eingelegt werden können. Wenn sich dieses Verhältnis umkehrt, kann der Puffer wieder entleert werden, indem mittels der Übergabeeinrichtung auf einen an einem jeweiligen Pufferplatz abgelegten Träger zurückgegriffen wird.

Der Pufferplatz kann mit einer einen beidseitigen Überstand der Träger ermöglichenden Auflage für die Träger versehen sein, um auf diese Weise ein sicheres und zuverlässiges Aufnehmen mittels der Übergabeeinrichtung zu gewährleisten. Diese Auflage kann beispielsweise von einer Mehrzahl parallel beabstandeter Stege gebildet werden.

Die Verpackungsmaschine kann ein Kamerasystem umfassen, welches die Position und die Ausrichtung eines jeweiligen Trägers im Aufnahmebereich und die Position und die Ausrichtung eines Produktes relativ zum Träger erfassen kann. Diese Informationen können an die Übergabeeinrichtung übermittelt werden. Auf der Basis dieser Informationen kann zum Beispiel die Übergabeeinrichtung das Produkt auf dem Träger verschieben, um z.B. - wie an anderer Stelle erwähnt - ein Produkt von der Knicklinie zu schieben. Dies kann mittels der Halteeinrichtung erfolgen, die beispielsweise hierzu an der Übergabeeinrichtung zu einer Bewegung antreibbar angebracht, also relativ zur Aufnahme der Übergabeeinrichtung bewegbar ist. Die Halteeinrichtung kann in diesem Beispiel also gezielt auf der Basis der von dem Kamerasystem gelieferten Informationen angesteuert werden. Alternativ kann eine solche Nachpositionierung eines Produktes auch durch Bewegen der Übergabeeinrichtung als Ganzes erfolgen, wobei hierbei die Halteeinrichtung als eine Art Schieber oder Rechen eingesetzt oder eine andere, zusätzlich zur Halteeinrichtung an der Übergabeeinrichtung vorgesehene Positioniereinrichtung verwendet werden kann. Auch können von vornherein fehlerhafte Produkte oder Träger mittels des Kamerasystems erkannt und ausgeschleust werden, damit sie gar nicht erst von der Übergabeeinrichtung aufgenommen werden.

Ferner kann vorgesehen sein, dass für die Übergabeeinrichtung ein Fahrprofil festgelegt wird, um Kollisionen beim Bewegen vom Aufnahmebereich zum Einlegebereich, insbesondere Kollisionen mit der Faltkontur, zu vermeiden. Zum Festlegen des Fahrprofils kann eine Detektionsfahrt der Übergabeeinrichtung erfolgen. Insbesondere kann hierdurch für eine jeweilige Ausgestaltung insbesondere des Einlegebereiches das Bewegen der Übergabeeinrichtung eingelernt werden. Für ein solches "Teaching" kann ein Kamerasystem verwendet werden.

Die Erfindung wird im Folgenden beispielhaft unter Bezugnahme auf die Zeichnung beschrieben. Es zeigen:
- Fig. 1: schematisch eine Draufsicht auf eine mögliche Ausgestaltung einer erfindungsgemäßen Verpackungsmaschine,
- Fig. 2: eine perspektivische Ansicht auf einen Einlegebereich samt Aufnahmebereich und Pufferplätzen einer Verpackungsmaschine gemäß einer möglichen Ausführungsform,
- Fig. 3: eine ähnliche Ansicht wie Fig. 2, wobei zur Veranschaulichung ein zugeführter Produktträger im Aufnahmebereich dargestellt ist,
- Fig. 4: einen Schnitt senkrecht zur Transportrichtung durch den Aufnahmebereich der Verpackungsmaschine gemäß Fig. 2 und 3,
- Fig. 5: einen Produktträger, der auf einem Pufferplatz der Verpackungsmaschine der Fig. 2 bis 4 aufliegt,
- Fig. 6a und 6b: ein mögliches Ausführungsbeispiel einer erfindungsgemäßen Übergabeeinrichtung in unterschiedlichen Stellungen,
- Fig. 7a bis 7c: ein weiteres Ausführungsbeispiel einer erfindungsgemäßen Übergabeeinrichtung in unterschiedlichen Stellungen,
- Fig. 8: das Zusammenwirken zwischen der Halteeinrichtung einer Übergabeeinrichtung und einer Faltkontur der Verpackungsmaschine anhand einer möglichen Ausgestaltung der Faltkontur,
- Fig. 9: Darstellungen entsprechend Fig. 8 mit unterschiedlich ausgestalteten Faltkonturen, und
- Fig. 10: eine Darstellung entsprechend Fig. 8 und Fig. 9 mit einer weiteren Faltkontur.

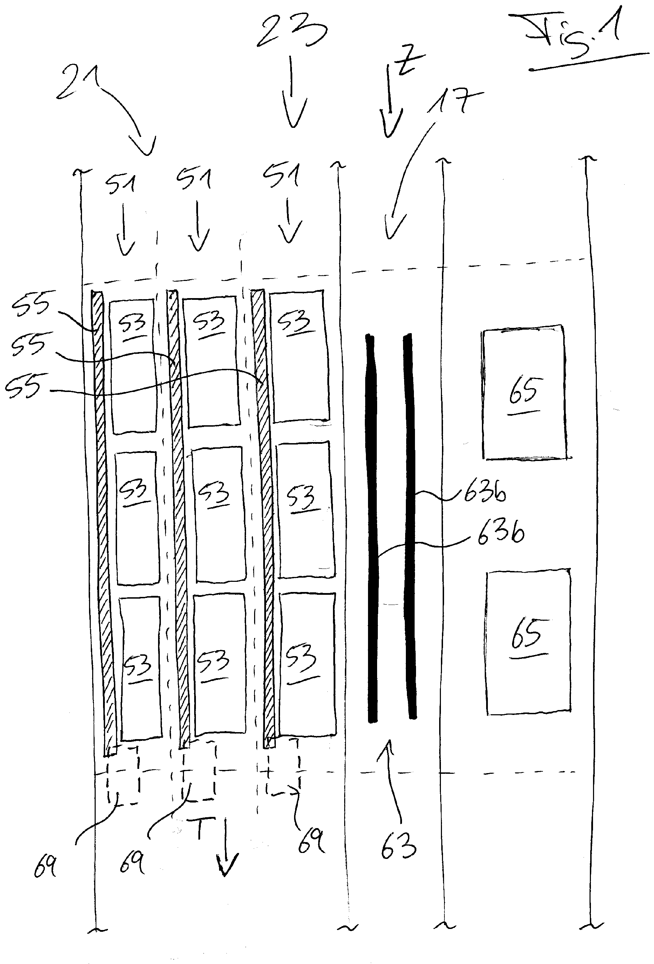

Fig. 1 zeigt schematisch in einer Draufsicht einen Bereich einer Verpackungsmaschine, der einen Zuführbereich 17 und einen Einlegebereich 21 umfasst, wobei zudem auf der vom Einlegebereich 21 abgewandten Seite des Zuführbereiches 17 ein Pufferbereich mit hier zwei schematisch dargestellten Pufferplätzen 65 angeordnet ist.

Verpackungsmaschinen zum Verpacken von Lebensmittelprodukten sind grundsätzlich bekannt, so dass hierauf nicht im Detail eingegangen zu werden braucht. Die üblichen Komponenten der Verpackungsmaschine 23 sind deshalb nicht dargestellt. Bei diesen Komponenten handelt es sich insbesondere um eine Tiefziehstation zum Ausbilden von beispielsweise muldenförmigen Vertiefungen in einer Folienbahn sowie um eine Siegelstation zum Verschließen der Vertiefungen, in die zuvor an einem Einlegebereich Produkte eingelegt worden sind.

Dieses Einlegen erfolgt bei der erfindungsgemäßen Verpackungsmaschine 23 an dem in Fig. 1 dargestellten Einlegebereich 21, und zwar mittels einer nicht dargestellten Übergabeeinrichtung in Form eines Pick-And-Place-Roboters, in dessen Arbeitsbereich der Pufferbereich, der Aufnahmebereich 17 sowie der Einlegebereich 21 liegen.

Am Aufnahmebereich 17 in einer Zuführrichtung Z zugeführte, auf einem Produktträger aufliegende Produkte (nicht dargestellt) werden mittels des Roboters aufgenommen und in die hier auch als Packungsbestandteile bezeichneten Vertiefungen eingelegt, die im Einlegebereich 21 jeweils einen Einlegeplatz 53 bilden.

Der Einlegebereich 21 umfasst hier ein Format von 3 x 3 Packungsbestandteilen 53, und zwar drei in Transportrichtung T parallel zueinander verlaufende Einlegezeilen 51 mit jeweils drei hintereinander angeordneten Einlegeplätzen 53.

Jede Einlegezeile 51 ist mit einer sich in Transportrichtung T erstreckenden Faltleiste 55 versehen, die jeweils auf der vom Aufnahmebereich 17 abgewandten Seite der betreffenden Einlegeplätze 53 angeordnet ist. Die Faltleisten 55 bilden jeweils einen Faltanschlag für einen jeweiligen Produktträger und definieren jeweils eine Faltkontur.

Der Aufnahmebereich 17 ist mit einer Wölbungskulisse 63 versehen, die hier von zwei parallel beabstandeten, sich parallel zur Zuführrichtung Z und somit parallel zur Transportrichtung T erstreckenden Erhöhungsleisten versehen ist, die jeweils einen erhöhten Auflageabschnitt 63b für ein nicht dargestelltes Förderband einer den Aufnahmebereich 17 bildenden Fördereinrichtung bilden.

Die Wölbungskulisse 63 und die Faltleisten 55 werden nachstehend in Verbindung mit den weiteren Figuren näher beschrieben.

Im Anschluss an den Einlegebereich 21, in Transportrichtung T gesehen, ist für jede Einlegezeile 51 ein Schwenkanschlag 69 vorgesehen. Wie im Einleitungsteil beschrieben, ist dieser Schwenkanschlag 69 mit einer Schwenkkontur versehen, die dafür sorgt, dass nach dem Einlegen der Träger in die Packungsbestandteile, wenn die Verpackungsmaschine 23 ihren nächsten Arbeitstakt ausführt, die Laschen der Träger durch Zusammenwirken mit der Schwenkkontur der Schwenkanschläge 69 weiter in Richtung der Basis des Trägers verschwenkt werden.

Die Verpackungsmaschine kann mehrere derartige Einlegebereiche 21 aufweisen, die in Transportrichtung T hintereinander angeordnet sind. Jedem derartigen Einlegebereich 21 ist dann ein Roboter zugeordnet, der zu verpackende Träger jeweils samt aufliegendem Produkt von einem jeweiligen Aufnahmebereich 17 aufnimmt. Die den Roboter tragende Konstruktion, die in das Traggestell der Verpackungsmaschine 23 integriert sein kann, wird auch als Roboterzelle bezeichnet, d.h. die Verpackungsmaschine 23 kann mehrere hintereinander in Transportrichtung T angeordnete Roboterzellen aufweisen.

Die Verpackungsmaschine 23 arbeitet taktweise. Ein Arbeitstakt besteht aus einer Stillstandsphase und einer auch als Vorziehen bezeichneten Bewegungsphase, in der die Packungsbestandteile formatweise weiterbewegt werden. Während einer jeweiligen Stillstandsphase werden am Einlegebereich 21 die an den Einlegeplätzen 53 befindlichen, zuvor z.B. durch Tiefziehen hergestellten Packungsbestandteile mit den jeweils auf einem Träger aufliegenden Produkten befüllt. Gleichzeitig werden während einer jeweiligen Stillstandsphase an der Tiefziehstation der Verpackungsmaschine ein Format von Vertiefungen in der Materialbahn ausgebildet und an der stromabwärts gelegenen Siegelstation ein Format von gefüllten Packungsbestandteilen durch eine auch als Oberfolie bezeichnete Materialbahn verschlossen.

Ein Format von Packungsbestandteilen muss nicht vollständig an einem Einlegebereich 21 befüllt werden. Das Einlegen von Trägern jeweils samt aufliegendem Produkt in ein Format kann auf mehrere hintereinander angeordnete Einlegebereiche 21 verteilt werden.

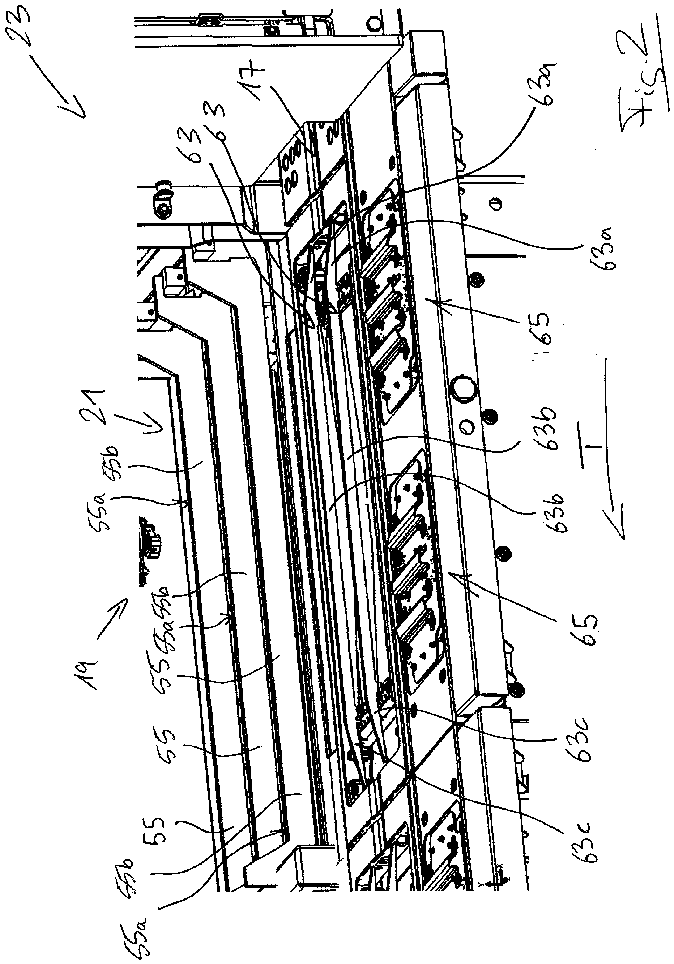

Fig. 2 zeigt am Einlegebereich 21 die drei Faltleisten 55, die jeweils eine schmale Oberseite 55a und eine zu den jeweiligen Einlegeplätzen 53 weisende Innenseite 55b aufweisen. Oberhalb des Einlegebereiches 21 ist teilweise ein Robotergreifer des als Übergabeeinrichtung 19 dienenden Roboters dargestellt.

Der Aufnahmebereich 17 ist mit den erwähnten Erhöhungsleisten 63 versehen, die zusammen die Wölbungskulisse für ein hier nicht dargestelltes Förderband bilden.

Jede Erhöhungsleiste 63 weist eine Auflauframpe 63a, einen sich anschließenden Auflageabschnitt 63b und eine sich wiederum anschließende Auslauframpe 63c auf.

Des Weiteren zeigt Fig. 2 den auf der vom Einlegebereich 21 abgewandten Seite des Aufnahmebereichs 17 vorgesehenen Pufferbereich mit den beiden Pufferplätzen 65. Außerdem ist in Fig. 2 teilweise ein sich in Transportrichtung T an den hier dargestellten Einlegeabschnitt der Verpackungsmaschine anschließender weiterer, identisch ausgebildeter Abschnitt mit Pufferbereich, Aufnahmebereich, Einlegebereich und Roboter dargestellt.

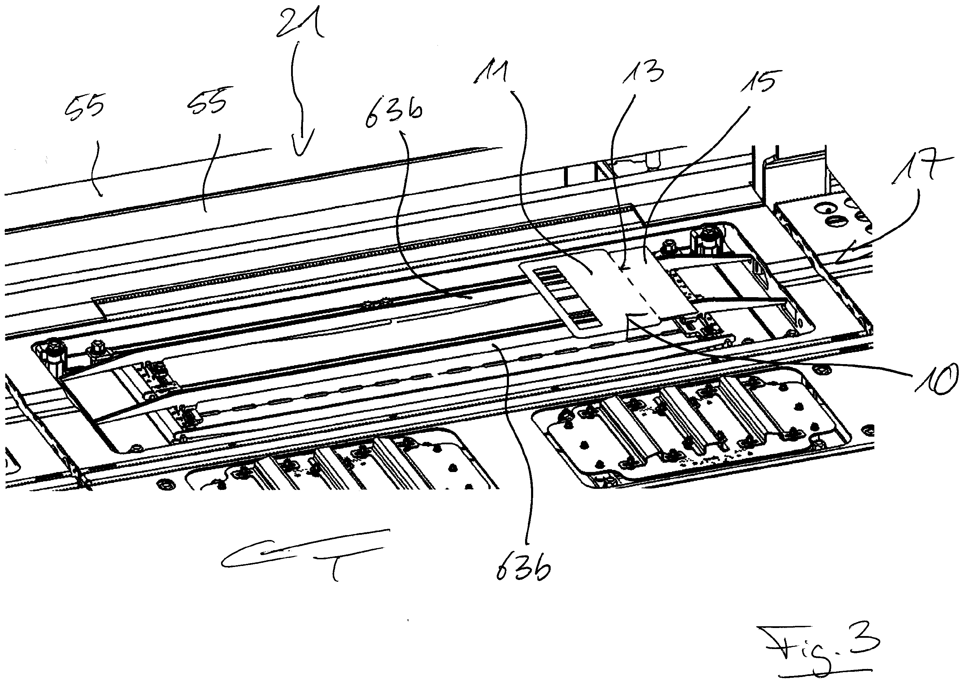

Fig. 3 zeigt den Aufnahmebereich 17 wiederum ohne das erwähnte Förderband, um zu veranschaulichen, dass die von den Erhöhungsleisten 63 gebildete Wölbungskulisse eine gegenüber der Breite eines Produktträgers 10 reduzierte Breite aufweist. Ein somit beidseitig überstehender Produktträger 10 kann folglich sicher und zuverlässig mittels der Übergabeeinrichtung aufgenommen werden.

Der Produktträger 10 ist hier als sogenanntes L-Board ausgebildet, das eine mit Sichtöffnungen versehene Basis 11 und eine Lasche 15 aufweist, die um eine hier als gestrichelte Linie angedeutete Knicklinie 13 relativ zur Basis 11 verschwenkt werden kann.

Das Zuführen dieser Produktträger 10, auf denen jeweils hier nicht dargestellte Produkte aufgelegt worden sind, erfolgt in einer Orientierung der Träger 10 dahingehend, dass die Knicklinie 13 senkrecht zur Transportrichtung T verläuft. Das Einlegen der Träger 10 in die Packungsbestandteile erfolgt mit parallel zur Transportrichtung T ausgerichteter Knicklinie 13, so dass die Träger 10 nach dem Aufnehmen und vor dem Einlegen um 90° gedreht werden müssen. Dies erfolgt durch die an anderer Stelle näher beschriebene Übergabeeinrichtung.

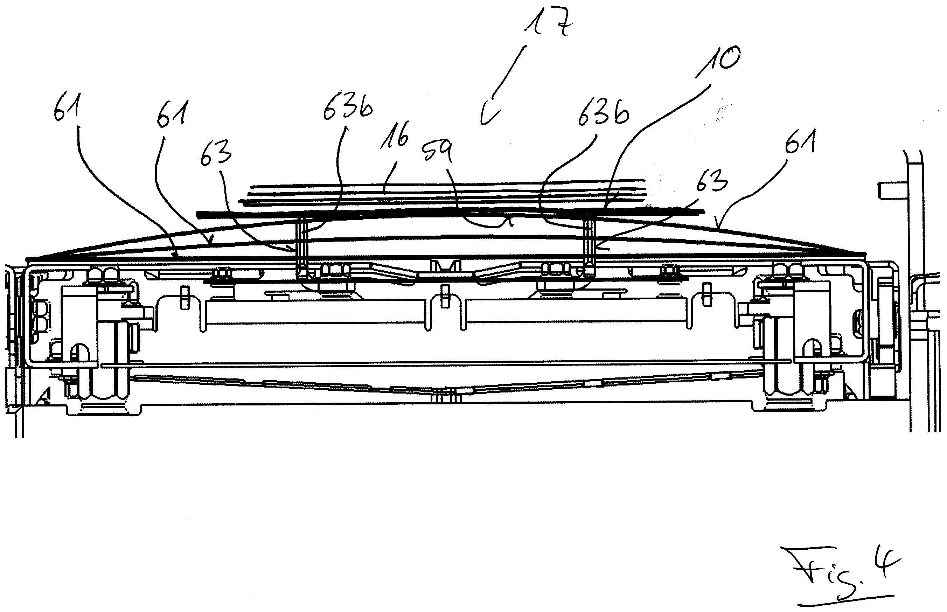

Der senkrecht zur Transportrichtung T verlaufende Querschnitt durch den Aufnahmebereich 17 gemäß Fig. 4 veranschaulicht die unterschiedlichen Wölbungen des Förderbandes 61, welches ein Bestandteil der Fördereinrichtung bildet, mit welcher die jeweils mit einem aufliegenden Produkt 16 versehenen Träger 10 dem Aufnahmebereich 17 zugeführt werden. Das Produkt 16 ist hier schematisch als eine geschindelte Portion aus mehreren zuvor - wie eingangs erläutert - mittels eines Hochleistungsslicers von einem Lebensmittelprodukt, beispielsweise Bacon, abgetrennten Scheiben dargestellt. Die Schindelung ist in Fig. 4 nicht zu erkennen, da diese senkrecht zum Verlauf der Knicklinie 13 (vgl. Fig. 3) erfolgt.

Die Wölbung des Förderbandes 61 verändert sich in Transportrichtung T. Vor dem Auflaufen auf die Erhöhungsleisten 63 befindet sich das Förderband 61 auf dem untersten, normalen Niveau und ist folglich nicht gewölbt. Im Bereich der Auflauframpe 63a und der Auslauframpe 63c (vgl. Fig. 3) befindet sich das Förderband 61 auf einem ungefähr mittleren Niveau und ist bereits leicht gewölbt.

Die stärkste Wölbung besitzt das Förderband 61 auf dem obersten Niveau, wenn das Förderband 61 auf den Auflageabschnitten 63b der Erhöhungsleisten 63 aufliegt. Fig. 4 zeigt, dass in Bezug auf die Breite der Träger 10 die Wölbung ausreichend ausgeprägt ist, um so ein beidseitiges Freilegen der Unterseiten der Randbereiche des Trägers 10 zu erreichen, mit anderen Worten einen seitlichen Überstand des Trägers 10 über denjenigen Bereich des Förderbandes 61 zu erzielen, der als Auflage 59 für den Träger 10 dient.

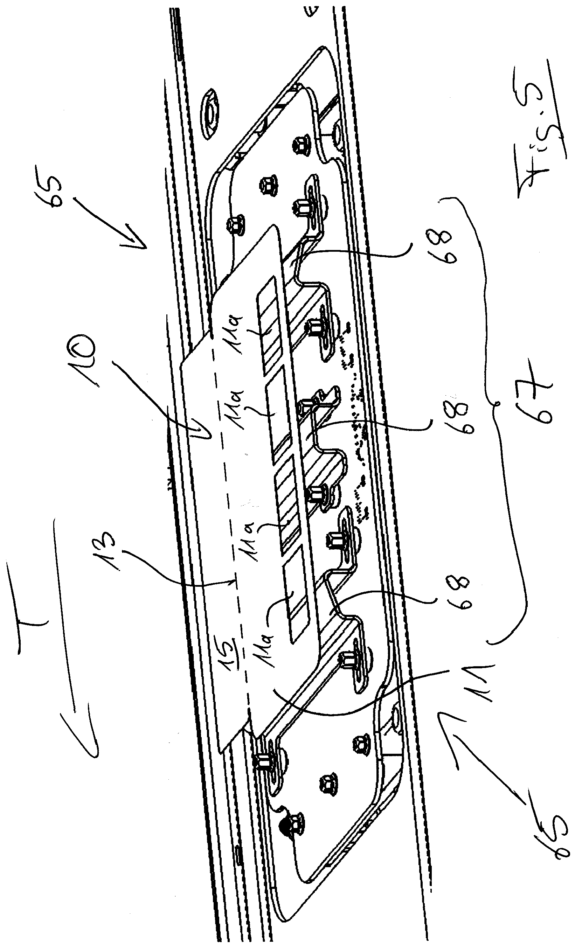

In Fig. 5 ist zu erkennen, dass der auf dem Pufferplatz 65 liegende Träger 10 nach dem Aufnehmen vom Aufnahmebereich 17 (vgl. Fig. 3) um 90° gedreht worden ist, so dass die Knicklinie 13 parallel zur Transportrichtung T verläuft. Der Träger 10 ist also mittels der Übergabeeinrichtung aufgenommen und gedreht, aber vorerst nicht in einen der Packungsbestandteile am Einlegebereich 21 eingelegt, sondern vorübergehend auf einem der Pufferplätze 65 "geparkt" worden. Der Pufferplatz 65 ist hierzu mit einer Auflage 67 versehen, die drei parallel beabstandete Auflagestege 68 umfasst. Es ergibt sich hierdurch ein in Transportrichtung T gesehen seitlicher Überstand über die beiden äußeren Auflagestege 68, mit anderen Worten ein beidseitiges Freilegen der Unterseiten der Randbereiche des Trägers 10, so dass der die Übergabeeinrichtung bildende Robotergreifer mit seinen beiden beweglichen Schaufeln unter die Basis 11 des Träger 10 greifen kann. Hierzu sind die beiden äußeren Auflagestege 68 mit nach außen abfallenden Schrägen versehen.

Fig. 5 zeigt außerdem vier in der Basis 11 des Trägers 10 ausgebildete Öffnungen 11a, durch welche hindurch das in der endgültigen Packung zwischen Basis 11 und verschwenkter Lasche 15 angeordnete Produkt auch von der hier in Fig. 5 nach unten weisenden Seite aus für einen Käufer sichtbar ist.

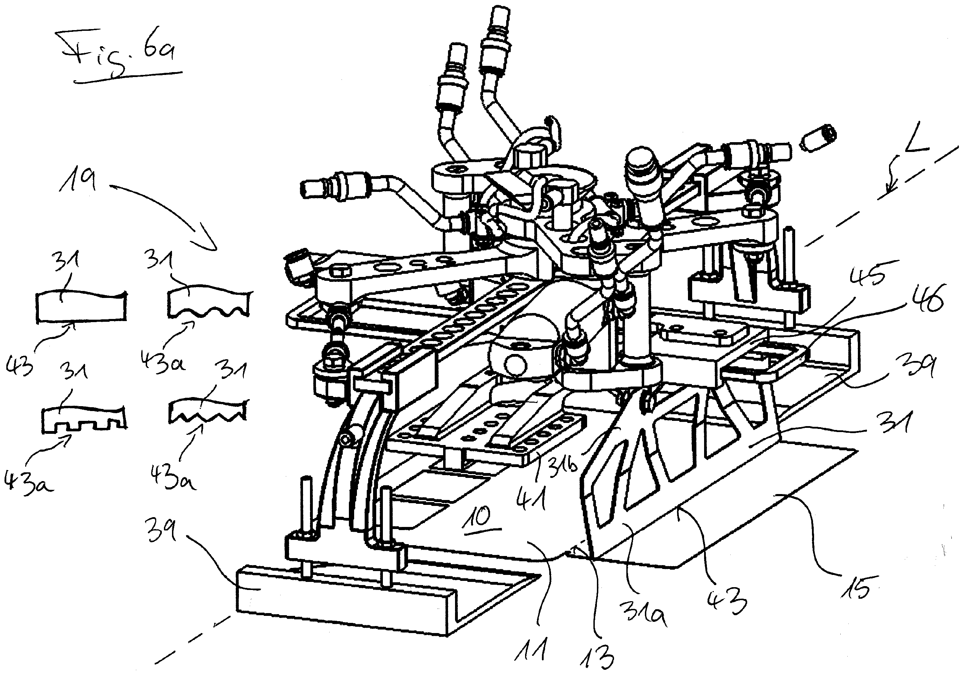

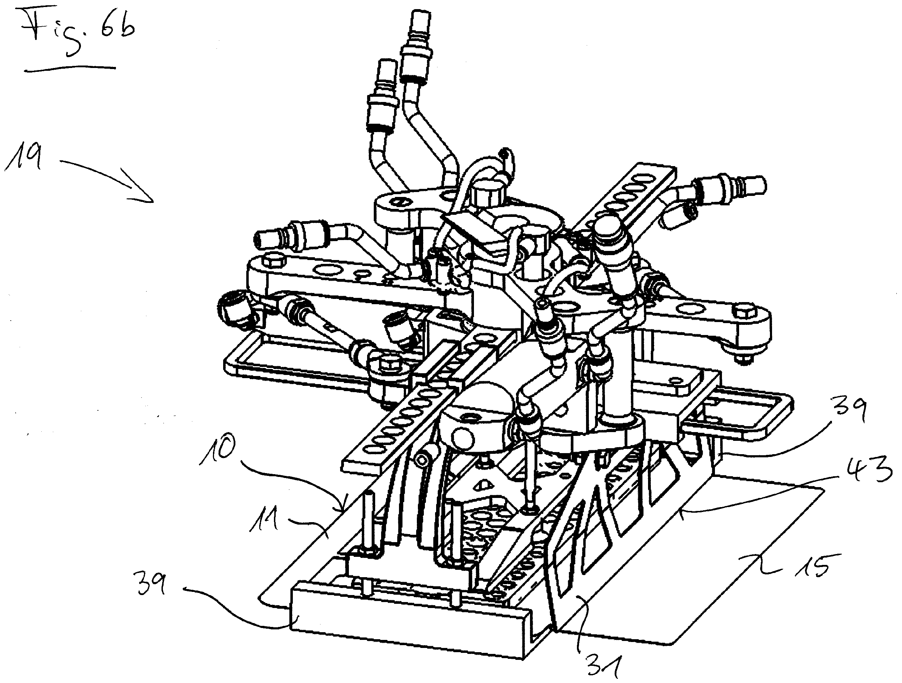

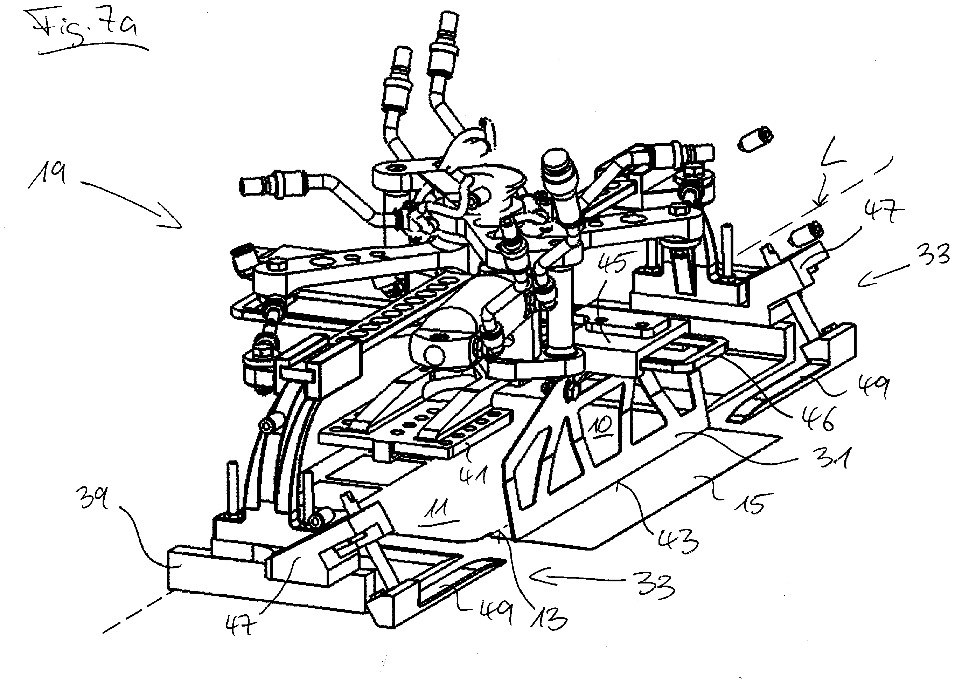

Als Übergabeeinrichtungen dienende Robotergreifer 19, wie sie in den Fig. 6a und 6b sowie 7a bis 7c dargestellt sind, sind hinsichtlich ihres grundsätzlichen Aufbaus und ihrer prinzipiellen Funktionalität bekannt, so dass auf diesbezügliche Einzelheiten nicht näher eingegangen zu werden braucht.

Die Greifer 19 sind jeweils mit einer Aufnahme zum Aufnehmen eines Trägers 10 in Form zweier Schaufeln 39 versehen, die parallel zu einer Längsachse L (vgl. Fig. 6a) des Greifers 19 relativ zueinander zwischen einer offenen Stellung (Fig. 6a) und einer geschlossenen Stellung (Fig. 6b) bewegbar sind. Für diese Bewegung der Schaufeln 39 dient ein pneumatischer Antrieb, auf den hier nicht näher eingegangen wird.

Wie der Vergleich der Fig. 6a und 6b zeigt, werden die Schaufeln 39 unter die Basis 11 eines jeweiligen Trägers 10 bewegt. Außerdem wird ein Produkthalter 41 (vgl. Fig. 6a) nach unten bewegt, um ein hier nicht dargestelltes, auf der Basis 11 des Trägers 10 aufliegendes Lebensmittelprodukt zu fixieren. Dies erfolgt vor dem Zusammenfahren der beiden Schaufeln 39, damit der Träger 10 nicht verrutscht, der Träger 10 samt aufliegendem Produkt also in der jeweils gewünschten Position relativ zum Greifer verbleibt.

Sowohl bei der Ausführungsform gemäß Fig. 6a und 6b als auch bei der Ausführungsform gemäß Fig. 7a bis 7c ist der Greifer 19 jeweils mit einer tafelförmigen, mit Durchbrechungen versehenen Halteeinrichtung 31 z.B. aus Blech oder Kunststoff versehen. Die Halteeinrichtung 31 ist an einem Tragabschnitt 45 befestigt, der wiederum an einem Rahmen 46 angebracht ist, entlang welchem der Tragabschnitt 45 und damit die Halteeinrichtung 31 senkrecht zur Längsachse L mittels eines nicht dargestellten Antriebs verfahren werden kann. Alternativ kann vorgesehen sein, dass die Halteeinrichtung 31 relativ zu einem Halteabschnitt in einer Richtung senkrecht zur Längsachse L verfahren werden kann, wobei dieser Halteabschnitt dann entweder zusätzlich selbst verfahrbar oder stationär angeordnet ist.

Bezogen auf eine vertikale, mittig durch die beiden Schaufeln 39 verlaufende Mittelebene des Greifers 19 ist die Halteeinrichtung 31 außermittig angeordnet. Eine vom unteren Ende der Halteeinrichtung 31 gebildete, geradlinige, parallel zur Längsachse L verlaufende Haltekante 43 befindet sich somit seitlich - in einer Richtung senkrecht zur Längsachse L gesehen - außerhalb des Bewegungsbereiches der Schaufeln 39.

Die Halteeinrichtung 31 ist in einem unteren, mit der Haltekante 43 versehenen Bereich 31b nach außen abgewinkelt, erstreckt sich also mit diesem unteren Bereich 31 b nicht in vertikaler Richtung. Ein oberer Bereich 31a der Halteeinrichtung 31, über welchen die Halteeinrichtung 31 am Tragabschnitt 45 befestigt ist, erstreckt sich dagegen in vertikaler Richtung.

Bezogen auf eine nach oben weisende, von den Schaufeln 39 definierte Auflagefläche für den Träger 10 ist die Halteeinrichtung 31 derart angeordnet, dass die Haltekante 43 der Halteeinrichtung näherungsweise in der durch diese Auflagefläche definierten Ebene verläuft. Wenn der Träger 10 auf den Schaufeln 39 aufliegt, wird der Träger 10 folglich von der Halteeinrichtung 31 mittels dessen Haltekante 43 von oben beaufschlagt.

Beim Aufnehmen eines jeweiligen Trägers 10 wird der Greifer 19 derart relativ zum Träger 10 positioniert, dass die Haltekante 43 den Träger 10 entlang der Knicklinie 13 beaufschlagt.

Wie im Einleitungsteil bereits erwähnt, kann eine Knicklinie 13 bereits in Form einer gezielten Schwächung des Trägers 10 zwischen Basis 11 und Lasche 15 vorhanden sein. Es ist aber auch möglich, eine solche Schwächung gezielt mittels der Halteeinrichtung 31 beim Aufnehmen des Trägers 10 herzustellen. Wie die kleinen Darstellungen links in Fig. 6a zeigen, kann hierzu die Haltekante 43 mit einer von einem geradlinigen Verlauf abweichenden Haltekontur 43a versehen sein, die beispielsweise einen gewellten, einen gezahnten oder einen gezackten Verlauf aufweisen kann.

Mit den Greifern 19 gemäß Fig. 6a und 6b erfolgt das Falten des Trägers 10, also das Verschwenken der Lasche 15 relativ zur Basis 11, durch Zusammenwirken mit einer jeweiligen Faltleiste 55 der Verpackungsmaschine, was nachstehend näher beschrieben wird.

Der Greifer gemäß den Fig. 7a bis 7c unterscheidet sich von jenem der Fig. 6a und 6b dadurch, dass der Greifer 19 selbst dazu in der Lage ist, die Lasche 15 relativ zur Basis 11 zu verschwenken. Hierzu ist der Greifer 19 an jeder seiner beiden Schaufeln 39 mit einer Schwenkeinrichtung 33 versehen. Abgesehen hiervon unterscheiden sich die beiden Greifer 19 nicht, so dass diesbezüglich auf die Ausführungen zu den Fig. 6a und 6b verwiesen wird.

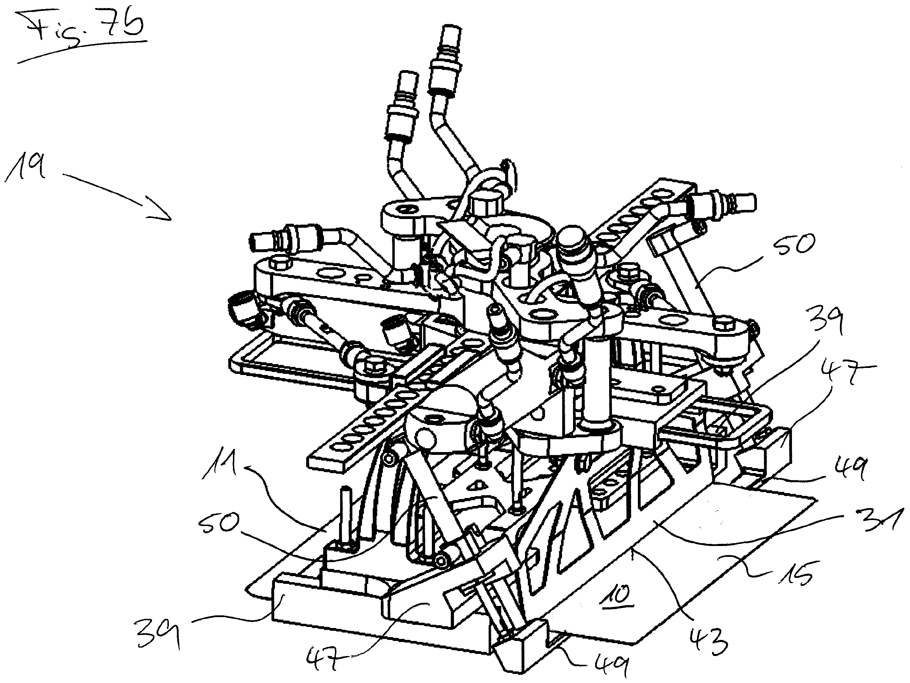

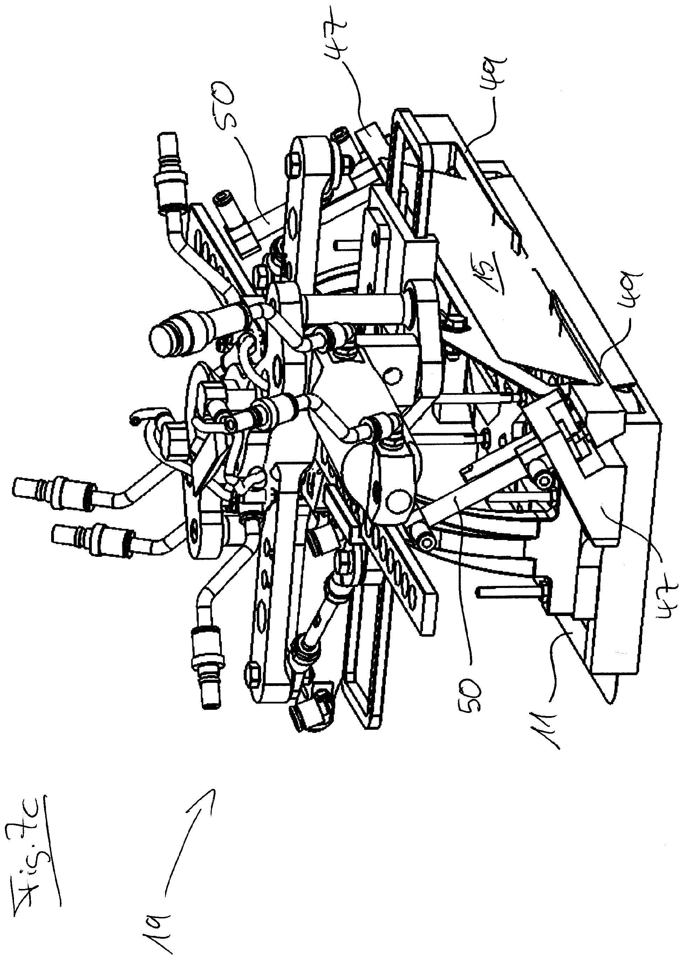

Jede Schwenkeinrichtung 33 umfasst eine Halterung 47, die an der jeweiligen Schaufel 39 befestigt ist und ein lang gestrecktes, parallel zur Längsachse L verlaufendes Schwenkorgan 49 trägt. Dieser "Schwenkfinger" 49 kann somit gemeinsam mittels der jeweiligen Schaufel 39 parallel zur Längsrichtung L bewegt werden, und zwar zwischen einer der offenen Stellung der beiden Schaufeln 39 entsprechenden passiven Stellung gemäß Fig. 7a und einer der geschlossenen Stellung der beiden Schaufeln 39 entsprechenden aktiven Stellung gemäß Fig. 7b. Diese aktive Stellung der Schwenkorgane 39 entspricht einer Ausgangsstellung, in welcher die Schwenkorgane 39 unter die zu verschwenkende Lasche 15 geschoben sind. Ausgehend von dieser Ausgangsstellung gemäß Fig. 7b sind die Schwenkorgane 49 jeweils mittels eines Antriebs in eine Endstellung gemäß Fig. 7c bewegbar, in welcher die Lasche 15 des Trägers 10 mittels der Schwenkorgane 49 in eine näherungsweise senkrechte Stellung relativ zur Basis 11 des Trägers 10 verschwenkt worden ist.

Die Arbeitsbewegung der Schwenkorgane 49 zwischen der Ausgangsstellung gemäß Fig. 7b und der Endstellung gemäß Fig. 7c ist eine lineare Bewegung, die jeweils mittels eines Pneumatikzylinders 50 bewerkstelligt wird. Alternative Bewegungsabläufe für die Schwenkorgane 49 sind möglich, beispielsweise Drehbewegungen oder Schwenkbewegungen.

Beim Verschwenken der Lasche 15 mittels der Schwenkorgane 49 wird der Träger 10 durch die an der Knicklinie 13 (vgl. Fig. 7a) mit ihrer Haltekante 43 wirksame Halteeinrichtung 31 gegen Abheben von den Schaufeln 39 gesichert.

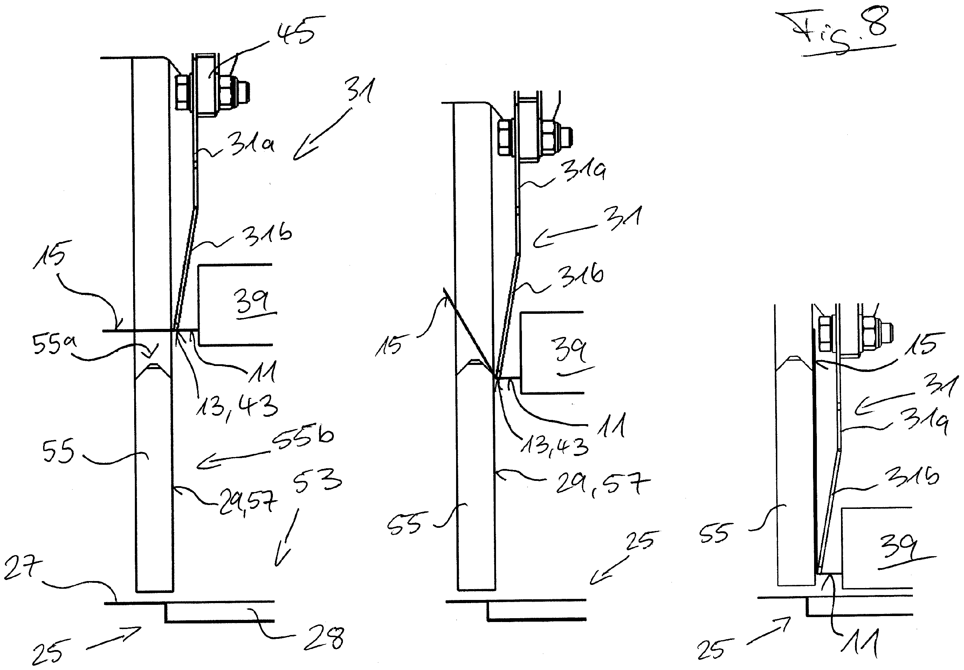

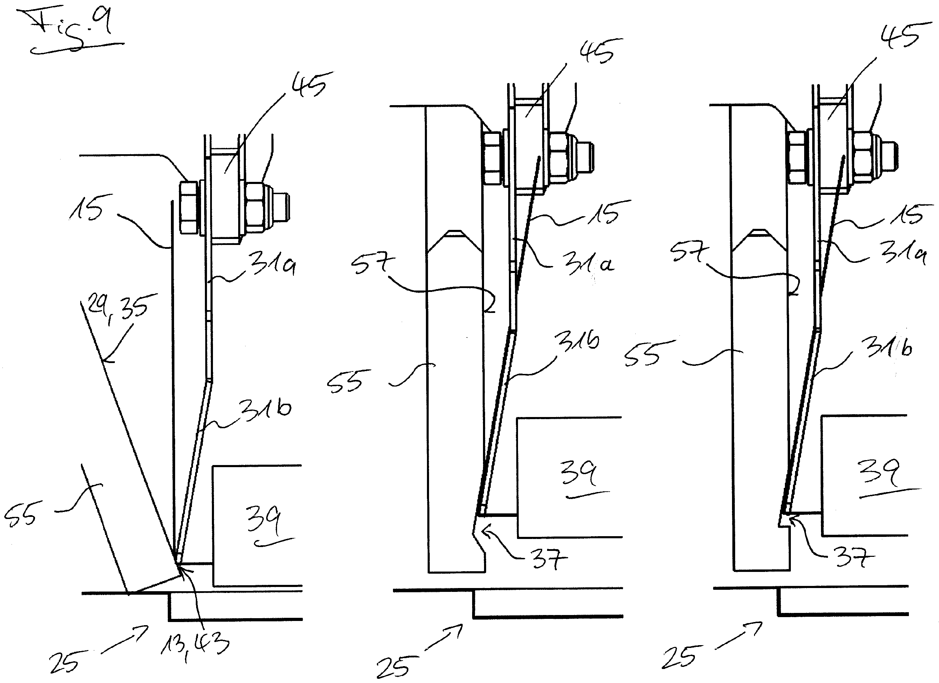

Die Fig. 8 und 9 veranschaulichen jeweils schematisch das Zusammenwirken der Halteeinrichtung 31 mit der von dem jeweiligen Faltanschlag 55 definierten Faltkontur 29 zum Verschwenken der Lasche 15 relativ zur Basis 11 eines jeweiligen Trägers.

Es ist jeweils die Rückseite einer Schaufel 39 des ansonsten nicht dargestellten Greifers 19 gezeigt, mit dem der jeweilige Träger aufgenommen worden ist und durch Abwärtsbewegen in einen bereitgestellten Packungsbestandteil 25 eingelegt werden soll. Der Packungsbestandteil 25 wird von einer Vertiefung 28 gebildet, die zuvor an einer Tiefziehstation der Verpackungsmaschine durch Tiefziehen in einer Materialbahn 27 in Form einer Unterfolie ausgebildet worden ist.

Der beispielsweise von einer Faltleiste gemäß Fig. 1 sowie Fig. 2 und 3 gebildete Faltanschlag 55 besitzt eine Oberseite 55a und eine nach innen, also zum Einlegeplatz 53 weisende Innenseite 55b, die hier in vertikaler Richtung verläuft. Die Faltkontur 29 wird hier folglich von einem vertikalen Wirkabschnitt 57 des Faltanschlags 55 gebildet. Der Faltanschlag 55 ist überlappend mit der entsprechenden seitlichen Begrenzung der Vertiefung 28 angeordnet, so dass eine gedachte Verlängerung der Faltkontur 29 nach unten innerhalb der Vertiefung 28 endet.

Wie bereits in Verbindung mit den Fig. 6a und 6b sowie 7a bis 7c erwähnt, ist die tafelförmige, beispielsweise von einem Blech oder einer Kunststoffplatte gebildete Halteeinrichtung 31 an ihrem unteren Bereich 31b abgewinkelt, so dass der vertikal verlaufende obere Bereich 31a gegenüber der am freien Ende des unteren Bereiches 31b gebildeten Haltekante 43 nach innen, also von der durch den vertikalen Wirkabschnitt 57 der Faltkontur 29 definierten vertikalen Ebene weg versetzt ist. Hierdurch ist sichergestellt, dass weder die Halteeinrichtung 31 selbst noch der Tragabschnitt 45, an welchem die Halteeinrichtung 31 mit ihrem oberen Bereich 31a befestigt ist, gegen die Anschlagleiste 55 stoßen kann, wenn der Greifer 19 und damit die Halteeinrichtung 31 nach unten bewegt wird.

Die Haltekante 43 ist an der Knicklinie 13 zwischen Lasche 15 und Basis 11 des Trägers wirksam, so dass durch Zusammenwirken von Haltekante 43 und Innenseite 55b des Faltanschlags 55 die Lasche 15 um die Knicklinie 13 relativ zur Basis 11 verschwenkt wird, wie es die mittlere Darstellung in Fig. 8 zeigt. Der Greifer 19 ist dabei derart programmiert, dass er sich auf einer Faltbahn bewegt, die dafür sorgt, dass die Haltekante 43 sich bei der Abwärtsbewegung nahe an der Innenseite 55b des Faltanschlags 55 bewegt.

Die nach innen weisende Schräge an der Oberseite 55a des Faltanschlags 55 stellt sicher, dass die Haltekante 43 nach innen gelenkt würde, wenn sich der Greifer 19 bei seiner Abwärtsbewegung näher am Faltanschlag 55 befinden würde.

Wie die Darstellung rechts in Fig. 8 zeigt, ist durch das Zusammenwirken von Halteeinrichtung 31 und Faltanschlag 55 die Lasche 15 um 90° relativ zur Basis 11 in eine zu dieser rechtwinklige Stellung verschwenkt worden. Sobald die Schaufeln 39 des Greifers 19 auseinanderbewegt werden, fällt der Träger 10 samt aufliegendem Produkt in die Vertiefung 28. Die nach oben geschwenkte Lasche 15 wird bei Weiterbewegung des Packungsbestandteils 25 in der Verpackungsmaschine mittels des Schwenkanschlags 69 (vgl. Fig. 1) weiter in Richtung der Basis 11 verschwenkt, um in die gewünschte Endstellung zu gelangen, die erforderlich ist, um das Verschließen der Packung an der Siegelstation zu ermöglichen.

Fig. 9 zeigt drei mögliche alternative Ausgestaltungen des Faltanschlags 55.

Links in Fig. 9 ist beispielhaft ein geneigt angeordneter Faltanschlag 55 dargestellt, der an seiner Innenseite mit einem geneigten Wirkabschnitt 35 versehen ist. Die Bewegung des Greifers 19 zum Einlegen des Trägers 10 in den Packungsbestandteil 25 kann hier von einer reinen vertikalen Abwärtsbewegung abweichen. Der Greifer 19 kann z.B. zunächst weiter nach außen bewegt und dann während seiner Abwärtsbewegung gleichzeitig nach innen bewegt werden, um auf diese Weise die Lasche 15 durch Zusammenwirken von Haltekante 43 und schrägem Wirkabschnitt 35 zu verschwenken.

In den Beispielen gemäß der mittleren Darstellung und der rechten Darstellung in Fig. 9 ist der Faltanschlag 55 jeweils wiederum mit einem vertikalen Wirkabschnitt 57 der Faltkontur 29 versehen, an den sich jedoch im unteren Bereich eine an der Innenseite des Faltanschlags 55 ausgebildete Hinterschneidung 37 anschließt. Mittels der Haltekante 43 drückt die Halteeinrichtung 31 den an die Knicklinie 13 angrenzenden Bereich der Lasche 15 in die Hinterschneidung 37 hinein, wodurch sich die Haltelasche 15 entsprechend der die Hinterschneidung 37 nach oben begrenzenden Fläche ausrichtet und gemäß den beiden hier dargestellten Beispielen jeweils weiter nach innen verschwenkt wird.

Die Bewegung der Haltekante 43 in die Hinterschneidung 37 hinein kann entweder durch eine entsprechend gesteuerte Querbewegung des Greifers 19 erreicht werden, die erfolgt, sobald während der Abwärtsbewegung der Bereich der Hinterschneidung 37 erreicht wird. Alternativ kann die Halteeinrichtung 31 durch elastische Verformung auslenkbar sein, so dass die Bewegung des Greifers 19 derart gesteuert werden kann, dass bei der Abwärtsbewegung die Halteeinrichtung 31 nach innen ausgelenkt wird, wenn sie über ihre Haltekante 43 mit dem Faltanschlag 55 zusammenwirkt. Die Rückstellkraft der hierbei erfolgenden elastischen Verformung der Halteeinrichtung 31 sorgt dann dafür, dass der untere Bereich 31b der Halteeinrichtung 31 den unteren Bereich der Lasche 15 automatisch in die Hinterschneidung 37 drückt, sobald diese während der Abwärtsbewegung erreicht wird.

Im mittleren Beispiel der Fig. 9 wird die Hinterschneidung 37 von einer unteren Auslaufschräge begrenzt, so dass die Halteeinrichtung 31 über ihre Haltekante 43 von selbst aus der Hinterschneidung 37 herausgelangen kann, wenn der Greifer 19 weiter in vertikaler Richtung abwärtsbewegt wird.

Bei dem Beispiel ganz rechts in Fig. 9 ist die Hinterschneidung 37 im unteren Bereich mit einer Stufe versehen, so dass eine Querbewegung des Greifers 19 weg von der Innenseite des Faltanschlags 55 erforderlich ist, um den Träger 10 weiter nach unten in Richtung des Packungsbestandteils 25 bewegen zu können.

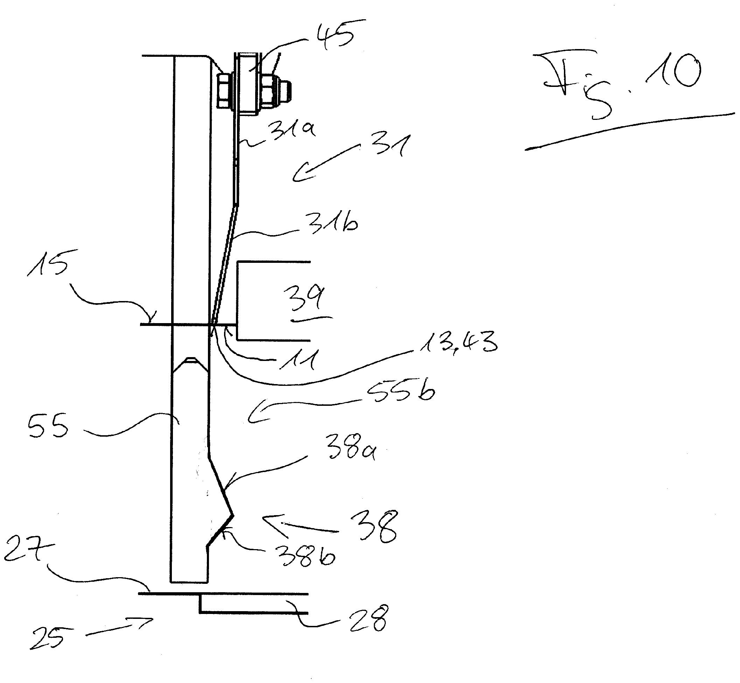

Bei dem Ausführungsbeispiel der Fig. 10 ist im Unterschied zu den in Fig. 8 und 9 gezeigten Ausführungsbeispielen, auf die zur Vermeidung einer nochmaligen Beschreibung hinsichtlich der Übereinstimmungen Bezug genommen wird, an der Innenseite 55b des Faltanschlags 55 ein Vorsprung 38 als Wirkabschnitt ausgebildet. Der Vorsprung 38 umfasst einen oberen Teilabschnitt 38a, der nach innen führt, und einen unteren Teilabschnitt 38b, der vom oberen Teilabschnitt 38b wieder zurück nach außen führt. Beide Teilabschnitte 38a, 38b sind gerade ausgeführt, wobei eine gekrümmte Ausgestaltung alternativ möglich wäre.

Bei Abwärtsbewegung des Greifers wird der untere Bereich 31b der Halteeinrichtung 31 zunächst vom oberen Teilabschnitt 38a nach innen elastisch ausgelenkt, gelangt dann aber aufgrund der Rückstellkraft zurück in die Ausgangsstellung, wobei sich die Lasche 15 des Trägers 10 am unteren Teilabschnitt 38b ausrichtet und so über einen Winkel von 90° hinaus in Richtung der Basis 11 verschwenkt wird.

### Bezugszeichenliste

- 10: Träger
- 11: Basis
- 11 a: Öffnung
- 13: Knicklinie
- 15: Lasche
- 16: Produkt
- 17: Aufnahmebereich
- 19: Übergabeeinrichtung
- 21: Einlegebereich
- 23: Verpackungsmaschine
- 25: Packungsbestandteil
- 27: Materialbahn
- 28: Vertiefung
- 29: Faltkontur
- 31: Halteeinrichtung
- 31a: oberer Bereich
- 31b: unterer Bereich
- 33: Schwenkeinrichtung
- 35: geneigter Wirkabschnitt
- 37: Wirkabschnitt als Hinterschneidung
- 38: Wirkabschnitt als Vorsprung
- 38a: oberer Teilabschnitt des Vorsprungs
- 38b: unterer Teilabschnitt des Vorsprungs
- 39: Auflage
- 41: Produktniederhalter
- 43: Haltekante
- 43a: Haltekontur
- 45: Tragabschnitt
- 46: Rahmen
- 47: Halterung
- 49: Schwenkorgan
- 50: Arbeitszylinder
- 51: Einlegezeile
- 53: Einlegeplatz
- 55: Faltanschlag
- 55a: Oberseite
- 55b: Innenseite
- 57: vertikaler Wirkabschnitt
- 59: Auflage der Fördereinrichtung
- 61: Endlosfördermittel
- 63: Wölbungskulisse
- 63a: Auflauframpe
- 63b: Auflageabschnitt
- 63c: Auslauframpe
- 65: Pufferplatz
- 67: Auflage des Pufferplatzes
- 68: Steg
- 69: Schwenkanschlag

- L: Längsachse
- T: Transportrichtung
- Z: Zuführrichtung

## Patentansprüche

1. Verfahren zur Handhabung von Lebensmittelprodukten (16), insbesondere von Portionen, die eine oder mehrere von einem Lebensmittel, z.B. Schinken, Wurst oder Käse, abgetrennte und gestapelte oder geschindelte Scheiben umfassen, bei dem
- zumindest ein jeweiliges Produkt (16) auf einen Träger (10) (10), insbesondere ein L-Board, gelegt wird, der eine Basis (11) und eine relativ zur Basis (11) um eine Knicklinie (13) verschwenkbare Lasche (15) aufweist,
- der Träger (10) (10) samt aufliegendem Produkt (16) einem Aufnahmebereich (17) zugeführt wird, der in einem Arbeitsbereich einer Übergabeeinrichtung (19), insbesondere eines Robotergreifers, gelegen ist,
- der Träger (10) (10) samt aufliegendem Produkt (16) von der Übergabeeinrichtung (19) aufgenommen, dann mittels der Übergabeeinrichtung (19) einem ebenfalls im Arbeitsbereich der Übergabeeinrichtung (19) gelegenen Einlegebereich (21) einer Verpackungsmaschine (23) zugeführt und dort mit einer Abwärtsbewegung der Übergabeeinrichtung (19) in einen Packungsbestandteil (25), insbesondere in eine in einer Materialbahn (27) ausgebildete Vertiefung (28) oder in eine Schale, eingelegt wird,
wobei der Träger (10) (10) während der Abwärtsbewegung an einer im Einlegebereich (21) angeordneten Faltkontur (29) vorbeibewegt und dabei einerseits die Lasche (15) durch Zusammenwirken mit der Faltkontur (29) relativ zur Basis (11) verschwenkt und andererseits der Träger (10) (10) von einer an oder im Bereich der Knickline (13) wirksamen Halteeinrichtung (31) der Übergabeeinrichtung (19) gegen Abheben gesichert wird.

2. Verfahren nach Anspruch 1,
wobei die Lasche (15) in eine Stellung verschwenkt wird, in der die Lasche (15) einen Winkel von zumindest näherungsweise 90° mit der Basis (11) einschließt.

3. Verfahren nach Anspruch 1 oder 2,
wobei die Übergabeeinrichtung (19) sich bei ihrer Abwärtsbewegung auf einer von der Faltkontur (29) abhängigen, von einer reinen Vertikalbewegung abweichenden Faltbahn bewegt und dabei die Lasche (15) an einem nicht vertikal verlaufenden Wirkabschnitt (35, 37) der Faltkontur (29) ausrichtet, um die Lasche über einen Winkel von 90° hinaus in Richtung der Basis (11) zu verschwenken,
insbesondere wobei durch das Bewegen der Übergabeeinrichtung (19) auf der Faltbahn die Halteeinrichtung (31) die Knicklinie (13) entlang zumindest eines zur Vertikalen geneigten oder gekrümmt verlaufenden Wirkabschnitts (35) der Faltkontur (29) und/oder entlang eines eine Hinterschneidung (37) oder einen Vorsprung (38) bildenden Wirkabschnitts der Faltkontur (29) bewegt.

4. Verfahren nach einem der vorhergehenden Ansprüche,
wobei die Lasche (15) nach dem Einlegen in den Packungsbestandteil (25) durch die Faltkontur (29) gegen ein Zurückschwenken gesichert wird, und/oder wobei der Träger (10) bei Weiterbewegung des Packungsbestandteils (25) in der Verpackungsmaschine (23) an einer Schwenkkontur der Verpackungsmaschine (23) vorbeibewegt und dabei die Lasche (15) durch Zusammenwirken mit der Schwenkkontur weiter in Richtung der Basis (11) verschwenkt wird.

5. Übergabeeinrichtung (19), insbesondere Robotergreifer, zur Aufnahme von Trägern (10), insbesondere L-Boards, auf denen jeweils zumindest ein Lebensmittelprodukt (16), insbesondere eine Portion, die eine oder mehrere von einem Lebensmittel, z.B. Schinken, Wurst oder Käse, abgetrennte und gestapelte oder geschindelte Scheiben umfasst, aufliegt und die jeweils eine Basis (11) und eine relativ zur Basis (11) um eine Knicklinie (13) verschwenkbare Lasche (15) aufweisen, wobei die Knicklinie (13) bei aufgenommenem Träger (10) parallel zu einer Längsachse (L) der Übergabeeinrichtung (19) verläuft,
wobei die Übergabeeinrichtung (19) eine Auflage (39) für einen jeweiligen Träger (10) und eine Halteeinrichtung (31) aufweist, die dazu angeordnet und ausgebildet ist, den Träger (10) gegen Abheben von der Auflage (39) zu sichern.

6. Übergabeeinrichtung nach Anspruch 5,
wobei die Halteeinrichtung (31) außermittig angeordnet ist, insbesondere seitlich neben einem Produktniederhalter (41) der Übergabeeinrichtung (19),
und/oder wobei die Übergabeeinrichtung (19) auf der Seite der Halteeinrichtung (31) einen freien Schwenkbereich aufweist, in dem die Halteeinrichtung (31) das am weitesten außen gelegene Bauteil der Übergabeeinrichtung (19) ist,
und/oder wobei die Auflage (39) von zumindest einer Schaufel gebildet ist, die unter die Basis (11) eines jeweiligen Trägers (10) bringbar ist, um den Träger (10) aufzunehmen,
und/oder wobei die Auflage (39) von zwei relativ zueinander in einer Richtung parallel zur Längsachse (L) zwischen einer offenen Stellung und einer geschlossenen Stellung bewegbaren Schaufeln gebildet ist.

7. Übergabeeinrichtung nach Anspruch 5 oder 6,
wobei die Halteeinrichtung (31) eine der Auflage (39) zugewandte, parallel zur Längsachse (L) verlaufende Haltekante (43) aufweist.

8. Übergabeeinrichtung nach Anspruch 7,
wobei die Haltekante (43) der Halteeinrichtung (31) sich seitlich außerhalb der Auflage (39) erstreckt,
und/oder wobei die Halteeinrichtung (31) in einem oberen Bereich (31a) gegenüber einem die Haltekante (43) umfassenden unteren Bereich (31b) in einer Richtung quer zur Längsrichtung (L) nach innen zurückgesetzt ist, insbesondere wobei die Halteeinrichtung (31) einen nach außen abgewinkelten unteren Bereich (31b) aufweist, dessen freies unteres Ende von der Haltekante (43) gebildet ist,
und/oder wobei die Halteeinrichtung (31) sich ausgehend von einem Tragabschnitt (45) der Übergabeeinrichtung (19) nach unten erstreckt und an ihrem freien Ende mit der Haltekante (43) versehen ist,
und/oder wobei die Haltekante (43) einen geradlinigen Verlauf aufweist oder mit einer, insbesondere gewellten oder gezahnten, Haltekontur (43a) versehen ist, die eine Mehrzahl von auf einer Linie liegenden Vorsprüngen aufweist.

9. Übergabeeinrichtung nach einem der Ansprüche 5 bis 8,
wobei die Halteeinrichtung (31) zumindest näherungsweise in einer Ebene wirksam ist, die durch eine Auflagefläche der Auflage (39) definiert ist, und/oder wobei die Halteinrichtung (31) zumindest bereichsweise tafelförmig ausgebildet ist,
und/oder wobei die Halteeinrichtung (31) in einer Richtung quer zur Längsachse (L) unter elastischer Verformung auslenkbar ist,
und/oder wobei die Übergabeeinrichtung (19) mit einer Positioniereinrichtung versehen ist, die dazu ausgebildet ist, bei aufgenommenem Träger (10) ein jeweils aufliegendes Lebensmittelprodukt (16) relativ zu dem Träger (10) zu verschieben,
und/oder wobei die Halteeinrichtung (31) relativ zu der Auflage (39), insbesondere zu einer oder mehreren die Auflage (39) bildenden Schaufeln, zu einer Bewegung antreibbar ist.

10. Verpackungsmaschine (23) zum Verpacken von Lebensmittelprodukten (16),
insbesondere von Portionen, die eine oder mehrere von einem Lebensmittel, z.B. Schinken, Wurst oder Käse, abgetrennte und gestapelte oder geschindelte Scheiben umfassen, wobei die Produkte (16) jeweils auf einem Träger (10), insbesondere einem L-Board, liegen, der eine Basis (11) und eine relativ zur Basis (11) um eine Knicklinie (13) verschwenkbare Lasche (15) aufweist,
wobei die Verpackungsmaschine (23) einen Aufnahmebereich (17), eine Übergabeeinrichtung (19), insbesondere eine Übergabeeinrichtung nach einem der Ansprüche 10 bis 29, und einen Einlegebereich (21) umfasst, wobei die Träger (10) jeweils samt aufliegendem Produkt (16) dem Aufnahmebereich (17) zuführbar, von der Übergabeeinrichtung (19) aufnehmbar, mittels der Übergabeeinrichtung (19) dem Einlegebereich (21) zuführbar und mit einer Abwärtsbewegung der Übergabeeinrichtung (19) in einen Packungsbestandteil (25), insbesondere in eine in einer Materialbahn (27) ausgebildete Vertiefung (28) oder in eine Schale, einlegbar sind, wobei der Einlegebereich (21) eine oder mehrere parallele Einlegezeilen (51) umfasst, entlang welcher die Packungsbestandteile (25) in einer Transportrichtung (T) durch den Einlegebereich (21) bewegbar sind und die jeweils einen oder mehrere Einlegeplätze (53) aufweisen, an dem ein jeweiliger Träger (10) samt aufliegendem Produkt (16) von der Übergabeeinrichtung (19) in einen Packungsbestandteil (25) einlegbar ist, und
wobei seitlich neben jedem Einlegeplatz (53) ein nach oben über das Niveau eines jeweiligen Packungsbestandteils (25) hinaus vorstehender Faltanschlag (55) angeordnet ist, der mit seiner Oberseite (55a) und seiner dem Einlegeplatz (53) zugewandten Innenseite (55b) eine Faltkontur definiert, an welcher ein jeweiliger Träger (10) während der Abwärtsbewegung mit seiner Lasche (15) anschlägt und durch welche die Lasche (15) relativ zur Basis (11) verschwenkt wird.

11. Verpackungsmaschine nach Anspruch 10,
wobei der Faltanschlag (55) von der Verpackungsmaschine (23) abnehmbar ist und/oder wobei die Position des Faltanschlags (55) relativ zu dem jeweiligen Einlegeplatz (53) verstellbar ist,
und/oder wobei der Faltanschlag (55) auf der vom Aufnahmebereich (17) abgewandten Seite des jeweiligen Einlegeplatzes (53) angeordnet ist, und/oder wobei der Faltanschlag (55) als eine sich in Transportrichtung (T) erstreckende Faltleiste ausgebildet ist, insbesondere wobei die Faltleiste sich über mehrere Einlegeplätze (53) der jeweiligen Einlegezeile (51) erstreckt,
und/oder wobei der Einlegebereich (21) mehrere Einlegezeilen (51) jeweils mit mehreren Einlegeplätzen (53) umfasst, und wobei an jeder Einlegezeile (51) eine sich über mehrere Einlegeplätze (53) erstreckende Faltleiste (55) angeordnet ist, insbesondere jeweils auf der vom Aufnahmebereich (17) abgewandten Seite der Einlegezeile (51).

12. Verpackungsmaschine nach Anspruch 10 oder 11,
wobei die Faltkontur (29) ausschließlich, insbesondere mit Ausnahme eines abgeschrägten oder abgerundeten Einlaufabschnitts an der Oberseite (55a) des Faltanschlags (55), vertikal verläuft, oder wobei die Faltkontur (29) einen vertikal verlaufenden Wirkabschnitt (57) umfasst,
und/oder wobei die Faltkontur (29) zumindest in einem oberen Bereich einen zum jeweiligen Einlegeplatz (53) hin gerichteten, nicht vertikal verlaufenden Wirkabschnitt (35) umfasst, der zumindest teilweise schräg oder gekrümmt verläuft,
und/oder wobei die Faltkontur (29) an der Innenseite (55b) des Faltanschlags (55) zumindest einen als Hinterschneidung (37) oder als Vorsprung (38) ausgebildeten Wirkabschnitt (37) umfasst.

13. Verpackungsmaschine nach einem der Ansprüche 10 bis 12,
wobei im Einlegebereich (21) oder bezogen auf die Transportrichtung (T) im Anschluss an den Einlegebereich (21) für die oder jede Einlegezeile (51) ein Schwenkanschlag angeordnet ist, der eine sich in Transportrichtung (T) verändernde Schwenkkontur definiert, die derart geformt ist, dass bei Vorbeibewegen eines in einen Packungsbestandteil (25) eingelegten jeweiligen Trägers (10) dessen Lasche (15) durch Zusammenwirken mit der Schwenckontur weiter in Richtung der Basis (11) des Trägers (10) verschwenkt wird.

14. Verpackungsmaschine nach einem der Ansprüche 10 bis 13,
wobei der Aufnahmebereich (17) eine Fördereinrichtung umfasst, über welche die Träger (10) jeweils samt aufliegendem Produkt (16) zuführbar sind und welche zumindest im Aufnahmebereich (17) eine gewölbte Auflage (59) oder eine Auflage mit reduzierter Breite für die Träger (10) aufweist, die einen beidseitigen Überstand der Träger (10) ermöglicht, insbesondere wobei die Fördereinrichtung ein als Auflage (59) dienendes Endlosfördermittel (61), insbesondere ein Förderband oder eine Mehrzahl von parallelen Förderriemen, umfasst, welches im Aufnahmebereich (17) über eine Wölbungskulisse (63) mit gegenüber dem Endlosfördermittel (61) reduzierter Breite geführt ist, insbesondere wobei die Wölbungskulisse (63) eine oder mehrere in Transportrichtung (T) verlaufende Erhöhungsleisten (63) für das Endlosfördermittel umfasst, die jeweils eine Auflauframpe (63a), eine Auslauframpe (63c) und dazwischen einen erhöhten Auflageabschnitt (63b) für das Endlosfördermittel (61) umfasst.

15. Verpackungsmaschine nach einem der Ansprüche 10 bis 14,
wobei auf der vom Einlegebereich (21) abgewandten Seite des Aufnahmebereiches (17) wenigstens ein Pufferplatz (65) für zumindest einen Träger (10) angeordnet ist, wobei ein jeweiliger Träger (10) bedarfsweise mittels der Übergabeeinrichtung (19) auf dem Pufferplatz (65) ablegbar und vom Pufferplatz (65) aufnehmbar ist, insbesondere wobei der Pufferplatz (65) mit einer einen beidseitigen Überstand der Träger (10) ermöglichenden Auflage (67) für die Träger (10) versehen ist.
